# EUROPEAN PATENT APPLICATION

(11) **EP 4 557 777 A1**
(43) Date of publication of application: **21.05.2025**
(21) Application number: 23838967.0
(22) Date of filing: 12.07.2023
(51) Int. Cl.: H04W 4/02

(54) **COMMUNICATION METHOD BASED ON SL POSITIONING ASSISTANCE INFORMATION, TERMINAL, AND NETWORK SIDE DEVICE**

(30) Priority: 14.07.2022 CN 202210826252
(71) Applicant: Vivo Mobile Communication Co., Ltd., Dongguan, Guangdong 523863 (CN)
(72) Inventor: WANG, Yuanyuan, Dongguan, Guangdong 523863 (CN); PENG, Shuyan, Dongguan, Guangdong 523863 (CN); WU, Huaming, Dongguan, Guangdong 523863 (CN); LIU, Shixiao, Dongguan, Guangdong 523863 (CN)
(74) Representative: Michalski Hüttermann & Partner Patentanwälte mbB
(86) International application number: PCT/CN2023/106908
(87) International publication number: WO 2024/012477

(57) **Abstract**

This application discloses a communication method based on SL positioning assistance information, a terminal, and a network-side device, pertaining to the field of communication technologies. The communication method based on SL positioning assistance information in embodiments of this application includes: determining, by a first terminal, first SL positioning assistance information; and reporting, by the first terminal, the first SL positioning assistance information to a network-side device; where the network-side device includes at least one of a base station and a location management function LMF, the first SL positioning assistance information is used for configuring SL positioning required information for the first terminal by the network-side device, and the SL positioning required information includes at least one of SL positioning assistance data and SL positioning configuration information.

## Description

### CROSS-REFERENCE TO RELATED APPLICATIONS

The present invention claims priority to Chinese Patent Application No. 202210826252.4, filed with the China National Intellectual Property Administration on July 14, 2022 and entitled "COMMUNICATION METHOD BASED ON SL POSITIONING ASSISTANCE INFORMATION, TERMINAL, AND NETWORK-SIDE DEVICE", which is incorporated herein by reference in its entirety.

### TECHNICAL FIELD

This application pertains to the field of communication technologies, and specifically relates to a communication method based on SL positioning assistance information, a terminal, and a network-side device.

### BACKGROUND

Sidelink (Sidelink, SL), also known as side link or side-link, is used for direct communication between user equipments (User Equipment, UE) without passing through a network-side device. A long term evolution (Long Term Evolution, LTE) system supports sidelink transmission from the 12th release. LTE sidelink communication is based on broadcast, although supporting basic safety communication in vehicle to everything (vehicle to everything, V2X), not suitable for other more advanced V2X services. A 5th generation new radio (5^{th} Generation New Radio, 5G NR) system supports more advanced sidelink (sidelink) transmission designs, such as unicast and multicast or groupcast, so as to support more comprehensive service types (for example, more advanced V2X services).

In the NR system that needs network assistance, delivery of SL configuration information may require UE to report some assistance information (UE assistance Info) to the network-side device; otherwise, assistance-based SL positioning cannot be implemented.

### SUMMARY

Embodiments of this application provide a communication method based on SL positioning assistance information, a terminal, and a network-side device. In this way, UE reports SL positioning assistance information to a network-side device, and the network-side device can configure SL positioning required information to a first terminal based on first SL positioning assistance information, and can assist SL positioning and/or configure appropriate resources for SL positioning.

According to a first aspect, a communication method based on SL positioning assistance information is provided, where the method includes:
determining, by a first terminal, first SL positioning assistance information; and
reporting, by the first terminal, the first SL positioning assistance information to a network-side device; where
the first SL positioning assistance information is used for configuring SL positioning required information for the first terminal by the network-side device, and the SL positioning required information includes at least one of SL positioning assistance data and SL positioning configuration information.

According to a second aspect, a communication apparatus based on SL positioning assistance information is provided, where the method includes:
a first determining module, configured to determine first SL positioning assistance information; and
a first reporting module, configured to report the first SL positioning assistance information to a network-side device; where
the first SL positioning assistance information is used for configuring SL positioning required information for the first terminal by the network-side device, and the SL positioning required information includes at least one of SL positioning assistance data and SL positioning configuration information.

According to a third aspect, a communication method based on SL positioning assistance information is provided, where the method includes:
receiving, by a network-side device, first SL positioning assistance information reported by a first terminal; and
configuring, by the network-side device, SL positioning required information based on the first SL positioning assistance information for the first terminal, where the SL positioning required information includes at least one of SL positioning assistance data and SL positioning configuration information.

According to a fourth aspect, a communication apparatus based on SL positioning assistance information is provided, where the method includes:
a first receiving module, configured for a network-side device to receive first SL positioning assistance information reported by a first terminal; and
a first configuration module, configured for the network-side device to configure SL positioning required information based on the first SL positioning assistance information for the first terminal, where the SL positioning required information includes at least one of SL positioning assistance data and SL positioning configuration information.

According to a fifth aspect, a terminal is provided, where the terminal includes a processor and a memory, where a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to determine first SL positioning assistance information, and the communication interface is configured to report the first SL positioning assistance information to a network-side device, where the network-side device includes at least one of a base station and a location management function LMF, the first SL positioning assistance information is used for configuring SL positioning required information for the first terminal by the network-side device, and the SL positioning required information includes at least one of SL positioning assistance data and SL positioning configuration information.

According to a seventh aspect, a network-side device is provided, where the network-side device includes a processor and a memory, where a program or instructions capable of running on the processor are stored in the memory. When the program or the instructions are executed by the processor, the steps of the method according to the third aspect are implemented.

According to an eighth aspect, a network-side device is provided, including a processor and a communication interface, where the communication interface is configured to receive first SL positioning assistance information reported by a first terminal, and the processor is configured to configure SL positioning required information to the first terminal based on the first SL positioning assistance information, where the network-side device includes at least one of a base station and a location management function LMF, and the SL positioning required information includes at least one of SL positioning assistance data and SL positioning configuration information.

According to a ninth aspect, a communication system is provided, including a terminal and a network-side device, where the terminal can be configured to execute the steps of the communication method based on SL positioning assistance information according to the first aspect, and the network-side device can be configured to execute the steps of the communication method based on SL positioning assistance information according to the third aspect.

According to a tenth aspect, a readable storage medium is provided, where a program or instructions are stored in the readable storage medium, and in a case that the program or the instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the third aspect.

According to a twelfth aspect, a computer program/program product is provided, where the computer program/program product is stored in a storage medium, and the computer program/program product is executed by at least one processor to implement the steps of the method according to the first aspect.

In the embodiments of this application, because the first terminal reports the first SL positioning assistance information to the network-side device, the network-side device can configure the SL positioning required information to the first terminal based on the first SL positioning assistance information, and the SL positioning required information includes at least one of SL positioning assistance data and SL positioning configuration information, so that the network-side device can implement at least one of purposes of assisting SL positioning and configuring appropriate resources for SL positioning.

### BRIEF DESCRIPTION OF DRAWINGS

FIG. 1 is a block diagram of a wireless communication system according to an embodiment of this application;
FIG. 2 is a schematic diagram of a transmission interface of a wireless communication system according to an embodiment of this application;
FIG. 3A is a schematic flowchart of a communication method based on SL positioning assistance information according to an embodiment of this application;
FIG. 3B is a schematic flowchart of an RTT positioning procedure;
FIG. 3C is a schematic diagram of SL RTT positioning principles;
FIG. 3D is a schematic diagram of SL double-sided RTT or multi-RTT positioning principles;
FIG. 4 is a schematic flowchart of a communication method based on SL positioning assistance information according to an embodiment of this application;
FIG. 5 is a schematic flowchart of a communication method based on SL positioning assistance information according to an embodiment of this application;
FIG. 6 is a schematic flowchart of a communication method based on SL positioning assistance information according to an embodiment of this application;
FIG. 7 is a schematic flowchart of a communication method based on SL positioning assistance information according to an embodiment of this application;
FIG. 8 is a schematic flowchart of a communication method based on SL positioning assistance information according to an embodiment of this application;
FIG. 9 is a schematic diagram of an application example of a communication method based on SL positioning assistance information according to an embodiment of this application;
FIG. 10 is a schematic structural diagram of a communication apparatus based on SL positioning assistance information according to an embodiment of this application;
FIG. 11 is a schematic structural diagram of a communication apparatus based on SL positioning assistance information according to an embodiment of this application;
FIG. 12 is a schematic structural diagram of a communication apparatus based on SL positioning assistance information according to an embodiment of this application;
FIG. 13 is a schematic structural diagram of a communication apparatus based on SL positioning assistance information according to an embodiment of this application;
FIG. 14 is a schematic structural diagram of a communication apparatus based on SL positioning assistance information according to an embodiment of this application;
FIG. 15 is a schematic structural diagram of a communication apparatus based on SL positioning assistance information according to an embodiment of this application;
FIG. 16 is a schematic structural diagram of a communication device according to this application;
FIG. 17 is a schematic diagram of a hardware structure of a terminal according to an embodiment of this application; and
FIG. 18 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the foregoing-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

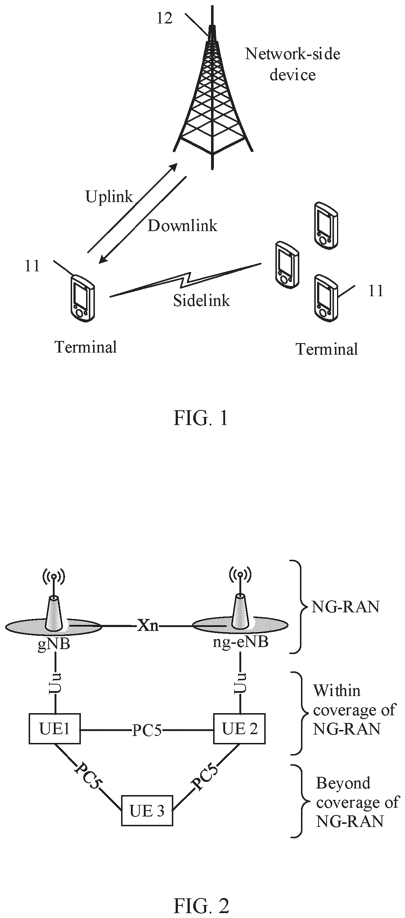

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a location server, a location management function (Location Management Function, LMF), an evolved serving mobile location center (Evolved Serving Mobile Location Center, E-SMLC), and the like. It should be noted that, in the embodiments of this application, a core network device in an NR system is used as an example for description, and a specific type of the core network device is not limited.

The following describes some basic concepts involved in the embodiments of this application.

Sidelink (Sidelink, SL) is also referred to as side link, side-link, or side link. As shown in FIG. 1, the sidelink is used for direct data transmission between terminal devices 11 without passing through the network-side device 12, and the sidelink transmission is relative to the main link transmission, where the main link transmission includes uplink transmission initiated by the terminal device 11 to the network-side device 12 and downlink transmission initiated by the network-side device 12 to the terminal device 11.

LTE sidelink communication is based on broadcast. Although LTE sidelink can be used to support basic safety communication of vehicle to everything (vehicle to everything, V2X), LTE sidelink is not applicable to other more advanced V2X services. A 5G NR (New Radio) system may support a more advanced sidelink transmission design, such as unicast and multicast or groupcast, so as to support more comprehensive service types.

At present, NR sidelink includes but is not limited to at least one of the following channels:
physical sidelink control channel (physical sidelink control channel, PSCCH);
Physical sidelink shared channel (physical sidelink shared channel, PSSCH);
Physical side link broadcast channel (physical sidelink broadcast channel, PSBCH); and
Physical side link feedback channel (physical sidelink feedback channel, PSFCH).

The NR sidelink includes but is not limited to at least one of the following signals:
sidelink primary synchronization signal (sidelink Primary Synchronization Signal, S-PSS);
sidelink Synchronization Signal (sidelink Synchronization Signal, S-SS);
sidelink positioning reference signal (sidelink Positioning Reference Signal, SL PRS);
sidelink demodulation reference signal (sidelink Demodulation Reference Signal, SL DMRS);
sidelink channel state information reference signal (sidelink Channel State Information Reference Signal, SL CSI-RS); and
sidelink phase-tracking reference signal (sidelink Phase-tracking reference signal, SL PTRS).

NR V2X defines two resource allocation modes (mode): in mode 1, resources are scheduled by a base station; in mode 2, UE determines itself what resources to be used for transmission. In this case, resource information may be obtained from a broadcast message of the base station or pre-configured information. If the UE operates within coverage of the base station and has a radio resource control (Radio Resource Control, RRC) connection to the base station, the UE can operate in mode 1 and/or mode 2; if the UE operates within coverage of the base station but has no RRC connection to the base station, the UE can operate only in mode 2; and if the UE is outside coverage of the base station, the UE can merely operate in mode 2 and performs V2X transmission based on pre-configured information.

In mode 2, a specific working manner is as follows: (1) After resource selection is triggered, a transmit terminal (TX UE) first determines a resource selection window, with a lower boundary of the resource selection window being at a time of T1 after triggering of resource selection and an upper boundary for resource selection being a time of T2 after triggering, where T2 is a value selected by the UE from a packet delay budget (packet delay budget, PDB) of its transport block (transport block, TB) transmission, and T2 is not earlier than T1. (2) Before resource selection, the UE needs to determine a candidate resource set (candidate resource set) for resource selection by comparing a reference signal received power (reference signal received power, RSRP) measured on resources in a resource selection window with a corresponding RSRP threshold and then adding the resources into the candidate resource set if the RSRP is lower than the RSRP threshold (threshold). (3) After the resource set is determined, the UE randomly selects a transmission resource from the candidate resource set. In addition, the UE may reserve transmission resources for a next transmission during a current transmission. In addition, NR V2X supports chained resource reservation, that is, one piece of sidelink control information (Sidelink Control Information, SCI) may be used for reserving a current resource and also for reserving a maximum of two additional resources, and two more reserved resources can be indicated on a next resource. In the selection window, resources may be continuously reserved in a dynamic reservation manner.

FIG. 2 is a schematic diagram of a transmission interface of a wireless communication system to which the embodiments of this application are applicable. As shown in FIG. 2, a new generation radio access network (New Generation Radio Access Network, NG-RAN) may include an NR node (gNB) and a new generation evolved node B (New Generation evolved Node B, ng-eNB), and the gNB and ng-eNB communicate with each other through an Xn interface. Within the coverage of the NG-RAN, terminals (such as UE1 and UE2) communicate through a PC5 interface, and the terminals (such as UE1 or UE2) communicate with a network node (such as gNB or ng-eNB) through a Uu interface. Outside the coverage of the NG-RAN (Outside NG-RAN coverage), the terminals (such as UE1 or UE2) communicate with other terminals (such as UE3) through a PC5 interface.

It should also be noted that in the embodiments of this application, the SL positioning reference signal (sidelink positioning reference signal) is a reference signal used for SL positioning, not necessarily just an SL PRS, and the SL positioning reference signal may include but is not limited to at least one of the following:
sidelink positioning reference signal (sidelink Positioning Reference Signal, SL PRS);
sidelink synchronization signal and PBCH block (Synchronization Signal and PBCH block, SL-SSB);
sidelink channel state information reference signal (sidelink Channel State Information Reference Signal, SL CSI-RS); and
sidelink phase-tracking reference signal (sidelink Phase-tracking reference signal, SL PTRS); and
sidelink demodulation reference signal (sidelink Demodulation Reference Signal, SL DMRS).

The following describes the communication method based on SL positioning assistance information provided in the embodiments of this application with reference to the accompanying drawings.

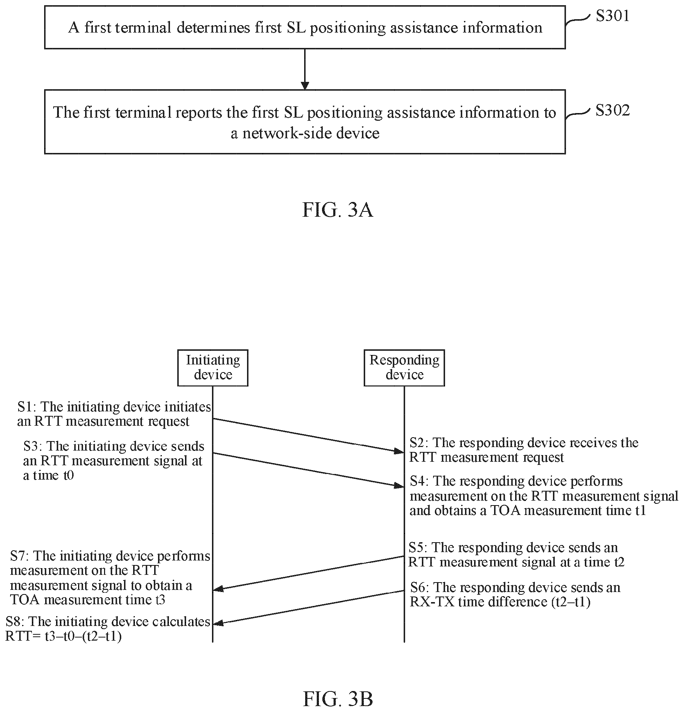

As shown in FIG. 3A, an embodiment of this application provides a communication method based on SL positioning assistance information, where the method may include:
Step 301: A first terminal determines first SL positioning assistance information.
Step 302: The first terminal reports the first SL positioning assistance information to a network-side device.

The first SL positioning assistance information is used for configuring SL positioning required information for the first terminal by the network-side device, and the SL positioning required information includes at least one of SL positioning assistance data and SL positioning configuration information.

The network-side device includes at least one of a base station and a location management function (Location Management Function, LMF).

Generally, the first SL positioning assistance information includes SL positioning assistance information of one or more related terminals. The related terminal is a terminal related to SL positioning. Specifically, the related terminal may include at least one of the first terminal and a second terminal, and the second terminal includes at least one of a terminal establishing an SL connection to the first terminal and a terminal performing SL positioning related information transmission with the first terminal, where the SL positioning related information includes but is not limited to at least one of an SL positioning reference signal and an SL positioning reference signal measurement result.

In an optional embodiment, the second terminal may be one or more of a target terminal, assistance UE (an assistance terminal, that is, a terminal for assisting SL positioning), a location serving terminal (a terminal for performing a location service), reference UE (a reference terminal), and a positioning reference unit (positioning reference unit, PRU).

In an optional embodiment, the second terminal may be a terminal that is determined based on a discovery procedure and can be used for SL positioning.

The SL positioning assistance information is generally related information used for assisting the terminal in SL positioning by the network-side device. The following uses the first SL positioning assistance information as an example to describe what information the SL positioning assistance information can specifically include, and details are not described herein.

In the communication method based on SL positioning assistance information according to the embodiments of this application, because the first terminal reports the first SL positioning assistance information to the network-side device, the network-side device can configure the SL positioning required information for the first terminal based on the first SL positioning assistance information, and the SL positioning required information includes at least one of SL positioning assistance data and SL positioning configuration information, so that the network-side device can implement at least one of purposes of assisting SL positioning and configuring appropriate resources for SL positioning.

Optionally, in a case that the related terminal includes a second terminal, the first SL positioning assistance information reported by the first terminal includes the SL positioning assistance information (which may be referred to as second SL positioning assistance information) of the second terminal. Therefore, before step 301, the method shown in FIG. 3A may further include: the first terminal receives second SL positioning assistance information sent by the second terminal, where the second SL positioning assistance information is used for determining the first SL positioning assistance information by the first terminal. More specifically, the second SL positioning assistance information is used for determining by the first terminal that the first SL positioning assistance information contains the SL positioning assistance information of the second terminal.

Optionally, in a case that the related terminal includes a second terminal, the first SL positioning assistance information reported by the first terminal includes related information (such as SL positioning assistance information) of the second terminal, which may be because the second terminal has an SL connection to the first terminal or the first terminal detects through the discovery procedure that the second terminal can be used to assist SL positioning, and then the first SL positioning assistance information includes information of the second terminal.

It should be noted that the first terminal may be either a transmit terminal (TX UE) or a receive terminal (RX UE), and in a case that the related terminal includes both the first terminal and the second terminal, if the first terminal is a TX UE, the number of second terminals can be more than one (one or more).

It should be noted that the first terminal can be either a target terminal (a terminal that needs to be located) or an assistance terminal. In a case that the related terminal includes both the first terminal and the second terminal, if the first terminal is an assistance terminal UE, the second terminal may include a target terminal and may also include other assistance terminals.

The following uses the first SL positioning assistance information as an example to describe what information the SL positioning assistance information can specifically include.

In one example, the first SL positioning assistance information may include at least one of the following:
(1) First bandwidth information, used to indicate a desired (Preferred) bandwidth for SL positioning reference signal transmission for the related terminal.
(2) First frequency information, used to indicate frequency information that is preferred for SL positioning reference signal transmission for the related terminal.
(3) Periodicity information, used to indicate information about a periodicity that is preferred for SL positioning reference signal transmission for the related terminal, such as information such as an SL PRS transmission (event trigger) period and an SL positioning measurement result event report (event report) period; optionally, in an embodiment, the periodicity information may also include information for indicating whether transmission of the SL positioning related information is periodic, such as for one time or being periodic.
(4) At least one of positioning service indication information and positioning request indication information of the related terminal; where the positioning service indication information is used to indicate a positioning request carried in an application layer or the location server; the positioning request indication information may be used to indicate a requirement (requirement) of the positioning service, the requirement of the positioning service specifically includes but is not limited to at least one of the following: accuracy, delay, priority, reliability, energy consumption, and the like, so that the network-side device can determine a corresponding resource configuration according to the requirement of the positioning service. The requirement of the positioning service may be directly reported by the related terminal, or indirectly reported by using a project quality index (Project Quality Index, PQI) or other quality of service (Quality of Service, QoS) identity (Identity, ID). In addition, during reporting of the requirement of the positioning service, it can be associated through a mechanism similar to an SL BSR destination index (destination index).
(5) An ID of the second terminal, where the ID of the second terminal may be at least one of a destination ID (destination ID), a member ID (member ID), a 5G S-temporary mobile subscription identifier (5G S-Temporary Mobile Subscription Identifier, 5G-S-TMSI), application layer identification information, a cell radio network temporary identifier (Cell Radio Network Temporary Identifier, C-RNTI), and the like. If the second terminal is an assistance terminal, optionally, location information of the second terminal may also be included.
(6) First time interval information corresponding to the related terminal, where the first time interval information includes at least one of first transmission time interval information and second transmission time interval information, where the first transmission time interval information is transmission time interval information of a first SL positioning reference signal and a second SL positioning reference signal, the second transmission time interval information is maximum transmission interval information of measurement result reporting information of the first SL positioning reference signal and first information, the first SL positioning reference signal is an SL positioning reference signal sent by the related terminal, the second SL positioning reference signal is an SL positioning reference signal received by the related terminal, and the first information includes at least one of SL positioning request information and SL positioning measurement information.
(7) Transmission time information that is preferred for SL positioning reference signal transmission for the related terminal, where the transmission time information includes at least one of a transmission start time and a transmission end time.
(8) SL positioning reference signal resource selection window information that is preferred for the related terminal.
(9) An SL positioning reference signal configuration that is preferred for the related terminal.
(10) An SL positioning reference signal configuration that is not preferred (nonpreferred) by the related terminal;
(11) An SL positioning reference signal transmission resource set preferred for the related terminal.
(12) An SL positioning reference signal transmission resource set not preferred for the related terminal.
(13) A requested or released resource for SL positioning for the related terminal.
(14) Configuration information of an SL positioning dedicated resource pool that is preferred for the related terminal.

It is easy to learn that most of the foregoing 14 pieces of information are related to transmission of the SL positioning reference signal. Therefore, in a case that the first SL positioning assistance information includes at least one of the foregoing 14 pieces of information, the network-side device can configure the related information of the SL positioning reference signal for the first terminal based on the foregoing 14 pieces of information.

In addition, the foregoing information may be related to one or more second terminals; therefore, the first SL positioning assistance information includes identification information of one or more second terminals, and the network-side device can select an appropriate second terminal to help the first terminal or the target terminal perform SL positioning.

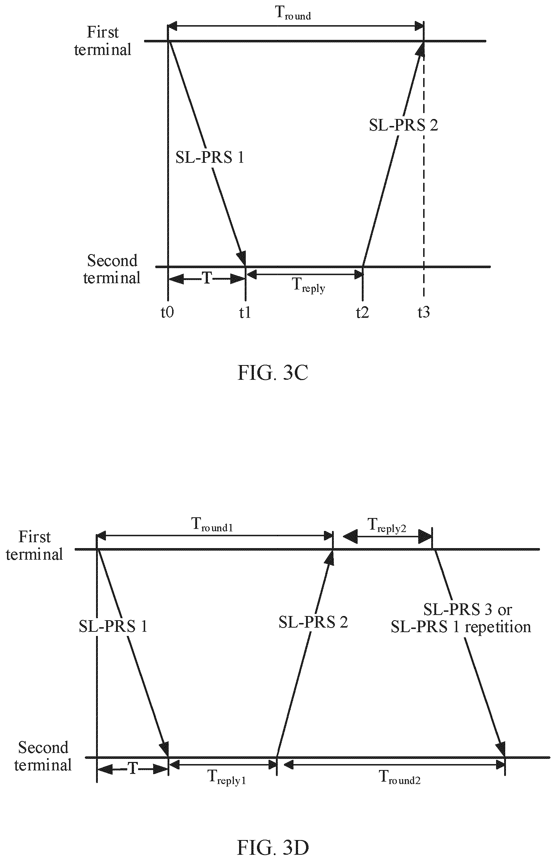

With reference to at least one of a schematic flowchart of reception-to-transmission (RECEPTION-TO-TRANSMISSION, RTT) positioning shown in FIG. 3B, a schematic diagram of SL RTT positioning principles shown in FIG. 3C and a schematic diagram of SL double-sided RTT or multi-RTT (RTT Double side RTT/multi-RTT) positioning principles shown in FIG. 3D, the following describes the first time interval information in the foregoing item (6) and possible cases of the first information.

As shown in FIG. 3B, the RTT positioning process includes:
Step 1: An initiating device (Initiating Device) initiates an RTT measurement request to a responding device (Responding Device).

The initiating device is a positioning request initiating device, and the responding device is a positioning request responding device. It can be understood that in SL positioning, the initiating device may be a terminal and the responding device may be another terminal. Specifically, in a case that the initiating device is the first terminal in this embodiment of this application, the responding device may be the second terminal in this embodiment of this application.

Step 2: The responding device receives the RTT measurement request.

After receiving the RTT measurement request, the responding device may prepare to receive an RTT measurement signal.

Step 3: The initiating device sends an RTT measurement signal to the responding device at a time t0.

Step 4: The responding device performs measurement on the RTT measurement signal sent by the initiating device, and obtains a time of arrival (Time of Arrival, TOA) t1 of the RTT measurement signal.

Step 5: The responding device sends an RTT measurement signal to the initiating device at a time t2.

Step 6: The responding device sends an RX-TX time difference t2-t1 to the initiating device.

Optionally, the responding device may alternatively send the RX-TX time difference in a payload (payload) of the RTT measurement signal sent at the time t2.

Step 7: The initiating device performs measurement on the RTT measurement signal sent by the responding device to obtain TOA t3.

Step 8: The initiating device calculates RTT=t3-t0-(t2-t1).

After the initiating device calculates RTT=t3-t0-(t2-t1), if a distance between the initiating device and the responding device needs to be estimated, it can be obtained by dividing RTT by 2 and multiplying it by the speed of light.

The advantage of RTT positioning is that it does not require absolute synchronization between the initiating device and the responding device, because t2 and t1 merely need to refer to a synchronization source of the responding device, and t3 and t0 merely need to refer to a synchronization source of the initiating device.

FIG. 3C is a schematic diagram of principles of SL positioning by using RTT. Referring to FIG. 3C, it can be learned that in SL, the initiating device may be a first terminal and the receiving device may be a second terminal. An RTT measurement signal sent by the first terminal to the second terminal at a time t0 is SL-PRS 1, and an RTT measurement signal sent by the second terminal to the first terminal at a time t2 is SL-PRS2.

On the basis of FIG. 3B and FIG. 3C, it can be known that in one example, when the first time interval information is transmission time interval information (first transmission time interval information) of the first SL positioning reference signal and the second SL positioning reference signal, the first time interval may be specifically a transmission time interval between SL-PRS1 and SL-PRS2: T+T_{reply} (as shown in FIG. 3C); when the first time interval is maximum transmission interval information (second transmission interval information) of measurement result reporting information of the first SL positioning reference signal and first information, the first time interval may be a maximum transmission interval between SL-PRS1 and the first information, where the first information may be the RTT measurement request in step 2 or the RTT measurement information in step 4 shown in FIG. 3B.

FIG. 3D is a schematic diagram of SL double-sided RTT or multi-RTT positioning principles. In FIG. 3D, the initiating device is the first terminal and the receiving device is the second terminal. Referring to FIG. 3B and FIG. 3D, it can be known that in another example, when the first time interval information is transmission time interval information (first transmission time interval information) of the first SL positioning reference signal and the second SL positioning reference signal, the first time interval may be specifically a transmission time interval between SL-PRS1 and SL-PRS2: T+Treply1 (as shown in FIG. 3D); when the first time interval information is maximum transmission interval information (second transmission time interval information) of measurement result reporting information of the first SL positioning reference signal and first information, the first time interval may be a maximum transmission interval between SL-PRS 1 measurement result reporting information and the first information, where the first information may be the RTT measurement request in step 2 or the RTT measurement information in step 4 shown in FIG. 3B.

Optionally, the first SL positioning assistance information may further include at least one of the following:
(15) First frequency indication information.
(16) First bandwidth part (Bandwidth Part, BWP) indication information.

The first frequency indication information is used for indicating at least one of a first frequency and a first frequency list, where the first frequency is a frequency that is preferred for SL positioning reference signal transmission for the related terminal, the first frequency list is a frequency list that is preferred for SL positioning reference signal transmission for the related terminal, and in a case that the first frequency is different from a second frequency, the first SL positioning assistance information includes the first frequency indication information and the second frequency is a frequency used for transmitting a sidelink shared channel (sidelink shared channel, SL-SCH). That is, in a case that a channel for transmitting SL data and a frequency for SL positioning reference signal transmission are different, it may include first frequency indication information and second frequency indication information respectively.

As one example, the first frequency indication information may include, but is not limited to, at least one of the following information:
① a position of the first frequency in the first frequency list;
② absolute frequency information corresponding to the first frequency and relative frequency information corresponding to the first frequency;
③ the first frequency indication information is used to indicate or assist the network-side device to configure a dedicated first frequency; and
④ frequency domain information of the first frequency relative to the second frequency.

The first BWP indication information is used to indicate a first BWP, where the first BWP is a BWP that is preferred for SL positioning reference signal transmission for the related terminal, and in a case that the first BWP is different from a second BWP, the first SL positioning assistance information includes the first BWP indication information, and the second BWP is a BWP used by the related terminal for transmitting an SL-SCH. That is, in a case that a channel for transmitting SL data and a frequency for SL positioning reference signal transmission are different, it may include first BWP indication information and second BWP indication information respectively.

As one example, the first BWP indication information may include but is not limited to at least one of the following information:
① a frequency domain position of the first BWP;
② a bandwidth of the first BWP;
③ a subcarrier spacing SCS corresponding to the first BWP;
④ a symbol position corresponding to the first BWP and for transmitting SL positioning related information;
⑤ a time domain position corresponding to the first BWP and for transmitting SL positioning related information; and
⑥ the first BWP indication information is used to indicate or assist the network-side device to configure a dedicated first BWP.

It is easy to learn that the items 15 and 16 of information are about the frequency and BWP for transmitting the SL positioning reference signal, respectively. Therefore, in a case that the first SL positioning assistance information includes the items 15 and 16 of information, the network-side device may configure, for the first terminal based on the items 15 and 16 of information, the frequency information and BWP for transmitting at least one of the SL positioning reference signal and the SL positioning information.

Optionally, the first SL positioning assistance information may further include at least one of the following:
(17) Sidelink discontinuous reception (sidelink Discontinuous Reception, SL DRX) configuration information of the related terminal.
(18) Whether the related terminal supports transmission of an SL positioning reference signal during an inactive time.

The SL DRX configuration information may include but is not limited to at least one of the following:
① an SL DRX cycle;
② a time length of an SL DRX onduration; and
③ a starting position of the SL DRX onduration.

Whether the related terminal supports transmission of an SL positioning reference signal during the inactive time is a capability of the related terminal, and the related terminal with such capability supports transmission of an SL positioning reference signal in the inactive time, while the related terminal without such capability does not support transmission of an SL positioning reference signal in the inactive time. Generally, SL DRX has two states: off and on, the off state is an inactive state and the on state is an active state.

It is not difficult to learn that the items 17 and 18 of information are related to SL DRX. Therefore, in a case that the first SL positioning assistance information includes the items 17 and 18 of information, the network-side device can configure the SL DRX configuration information for the first terminal based on the items 17 and 18 of information. Alternatively, based on the items 17 and 18 of information, the network-side device can avoid scheduled or configured resources for transmitting the SL positioning reference signal from being located at a DRX off time. In addition, optionally, the network-side device can determine the SL DRX configuration information based on the items 17 and 18 of information and DRX configuration information of the Uu interface, that is, aligning SL DRX with Uu DRX. Further, in a case that the first SL positioning assistance information includes the items 17 and 18 of information, the network-side device may configure, based on the items 17 and 18 of information for the first terminal, the SL positioning required information determined for the second terminal based on the SL DRX configuration information, so as to assist the first terminal and the second terminal in completing SL positioning.

Optionally, the first SL positioning assistance information may further include at least one of the following:
(19) Configuration information of a measurement gap (measurement gap) of the related terminal.
(20) Whether the related terminal supports transmission of an SL positioning reference signal within an active time of the measurement gap.

The configuration information of the measurement gap includes but is not limited to at least one of the following:
① a period of the measurement gap;
② a length of a duration of the measurement gap; and
③ a starting position of the duration of the measurement gap.

It is not difficult to learn that both the items 19 and 20 of information are related to the measurement gap of the related terminal. Therefore, in an embodiment, in a case that the first SL positioning assistance information includes the items 19 and 20 of information, the network-side device may configure for the first terminal the measurement gap of the related terminal based on the items 19 and 20 of information, so as to assist the related terminal in completing measurement on an SL positioning reference signal within the measurement gap. In another embodiment, in a case that the first SL positioning assistance information includes the items 19 and 20 of information, the network-side device can avoid scheduled or configured resources for transmitting the SL positioning reference signal from being located at the measurement gap, based on the items 19 and 20 of information. Further, in a case that the first SL positioning assistance information includes the items 19 and 20 of information, the network-side device may configure, based on the items 19 and 20 of information for the first terminal, the SL positioning required information determined for the second terminal based on the measurement gap, so as to assist the first terminal and the second terminal in completing SL positioning.

Optionally, the first SL positioning assistance information may further include at least one of the following:
(21) synchronization deviation information between the second terminal and the first terminal;
(22) synchronization source indication information of the second terminal; and
(23) serving cell identification information of the second terminal.

It can be learned that the items 21 to 23 of information are related to the synchronization information of the second terminal. Therefore, in an optional implementation, in a case that the first SL positioning assistance information includes the items 21 to 23 of information, the network-side device may configure related synchronization information of the second terminal for the first terminal based on the items 21 to 23 of information, so as to assist the second terminal in completing measurement of the SL positioning reference signal. In another optional implementation, in a case that the first SL positioning assistance information includes the items 21 to 23 of information, the network-side device may determine, based on the items 21 to 23 of information, scheduled or configured resources for transmitting the SL positioning reference signal or measuring the SL positioning reference signal, that is, the synchronization information is considered so as to determine resources for transmitting the SL positioning reference signal or measuring the SL positioning reference signal. Further, in a case that the first SL positioning assistance information includes the items 21 to 23 of information, the network-side device may configure, based on the items 21 to 23 of information for the first terminal, the SL positioning required information determined for the second terminal based on the synchronization information, so as to assist the first terminal and the second terminal in completing SL positioning.

Optionally, the first SL positioning assistance information may further include:
(24) The first SL positioning assistance information further includes preset capability information of the second terminal.

The preset capability information of the second terminal includes at least one of the following:
① whether the second terminal supports configuring the first frequency to transmit an SL positioning reference signal;
② whether the second terminal supports configuring the first BWP to transmit an SL positioning reference signal;
③ the number of SL positioning reference signals that the second terminal is able to measure in a single slot; for example, the number may be 1, 2, 4, 6, 8, 16, 24, 32, or the like;
④ the number of SL positioning reference signals that the second terminal is able to send in a single slot; for example, the number may be 1, 2, 4, 6, 8, 16, 24, 32, or the like;
⑤ whether the second terminal supports simultaneous sending and reception of SL positioning reference signals in a single slot;
⑥ second time interval information corresponding to the second terminal, where the second time interval information is time interval information between sending of an SL positioning reference signal and reception of an SL positioning reference signal;
⑦ third time interval information corresponding to the second terminal, where the third time interval information is time interval information between SL positioning reference signal transmission and sidelink shared channel SL-SCH transmission;
⑧ information about whether the second terminal supports simultaneous transmission of an SL positioning reference signal and an SL-SCH; and
⑨ whether the second terminal supports simultaneous measurement of an SL positioning reference signal and a Uu signal.

Further, in a case that the preset capability information of the second terminal includes information about whether the second terminal supports simultaneous transmission of the SL positioning reference signal and the SL-SCH (the foregoing ⑧ capability), the foregoing ⑧ capability may specifically include, but is not limited to, at least one of the following capabilities:
a) whether the second terminal supports simultaneous transmission of an SL positioning reference signal and an SL-SCH on the first frequency or a single frequency;
b) whether the second terminal supports simultaneous transmission of an SL positioning reference signal and an SL-SCH on the first BWP or a single BWP;
c) a frequency of the first BWP supported by the second terminal is the same as or different from a frequency of the second BWP, and the second BWP is a BWP used for sidelink shared channel SL-SCH transmission by the related terminal;
d) power control capability information of the second terminal;
e) information about a maximum number of SL positioning reference signal resources supported by the second terminal on one BWP; and
f) information about a maximum number of SL positioning reference signal resources supported by the second terminal on one BWP and one slot.

It can be seen that the item 24 of information is related to the preset capability of the second terminal. In a case that the first SL positioning assistance information includes the item 24 of information, the network-side device may configure, for the first terminal based on the item 24 of information, SL positioning required information matching the preset capability of the second terminal, so as to assist the first terminal and the second terminal in completing SL positioning.

Optionally, the first SL positioning assistance information may further include:
(25) Positioning mode information used by the related terminal.

The positioning mode information used by the related terminal is used but not limited to indicate at least one of the following information:
① only SL positioning;
② hybrid positioning, such as Uu+SL positioning;
③ sensor information;
④ relative positioning indication information;
⑤ absolute positioning indication information;
⑥ information about a reference point, where the reference point includes at least one of a reference terminal and a reference transmission and reception point TRP; and
⑦ a zone ID (zone ID).

It can be understood that in a case that the first SL positioning assistance information includes the item 25 of information, the network-side device may configure, for the first terminal based on the item 25 of information, positioning required information matching a positioning mode used by the related terminal, so as to assist the related terminal in completing related positioning. Alternatively, the network-side device may determine a positioning mode used by the first terminal and the related terminal based on the item 25 of information, so as to request the related terminal to complete the related positioning by using the positioning mode.

Optionally, the first SL positioning assistance information may further include:
(26) assistance information related to a road side unit (Road side unit, RSU), where the RSU is for establishing SL communication with the related terminal, and/or the RSU is an RSU selected by the related terminal for assisting SL positioning.

The assistance information related to the RSU includes but is not limited to at least one of the following:
① whether the related terminal supports RSU-assisted positioning;
② identification information of the RSU;
③ measurement information of the RSU, where the measurement information may include but is not limited to at least one of energy information, time information, and angle information; and
④ position information of the RSU.

It can be understood that in a case that the first SL positioning assistance information includes the item 26 of information, the network-side device may determine, based on the item 26 of information, related configuration information of the RSU for assisting the first terminal or the target terminal, so as to assist the related terminal in completing SL positioning.

Optionally, the first SL positioning assistance information may further include at least one of the following two items:
(27) configuration failure indication information of second information; and
(28) configuration refusal indication information for refusing configuration of the second information.

The second information may include, but is not limited to, at least one of the following:
① measurement gap or measurement window for measurement on an SL positioning reference signal;
② indicating information of a first SL resource, where the first SL resource includes an SL resource for SL positioning related information transmission;
③ SL DRX configuration information.
④ configuration information of the first frequency, where the first frequency is a frequency used for SL positioning reference signal transmission;
⑤ configuration information of a first BWP, where the first BWP is a BWP for SL positioning reference signal transmission; and
⑥ configuration information of a first bandwidth, where the first bandwidth is a bandwidth used for SL positioning reference signal transmission.

It can be understood that in a case that the first SL positioning assistance information includes at least one of the items 27 and 28 of information, the network-side device can learn about a case of a configuration failure or configuration refusal of the second information in a timely manner, so as to adjust configuration of the second information in a timely manner.

Optionally, the first SL positioning assistance information may further include:
(29) timing error group (timing error group, TEG) related information.

The TEG related information includes at least one of the following:
① an association list of TEGs and SL positioning reference signals may include the following fields: TEG ID, time stamp, and SL positioning reference signal;
② TEG type, where the TEG type includes at least one of the following: TX TEG, RX TEG, and RXTXTEG;
③ an ID of the related terminal; and
④ identification information of the SL positioning reference signal.

It can be understood that in a case that the first SL positioning assistance information includes at least one information in the foregoing item 29, the network-side device may adjust the related timing accordingly and then perform configuration after adjustment. Alternatively, the network-side device may request a related terminal or SL positioning reference signal accordingly, so as to reduce influence of the TEG.

Using the first SL positioning assistance information as an example, content contained in the SL positioning assistance information is listed above. It should be noted that in addition to the content listed in the item (29) above, the SL positioning assistance information may also contain other content not listed, and the content not listed also falls within a scope included by the SL positioning assistance information.

Optionally, in a specific embodiment, the foregoing step 302 may include: in a case that a first default trigger condition is met, the first terminal reports the first SL positioning assistance information to the network-side device; where

The first default trigger condition may include, but is not limited to, at least one of the following:
(1) the first terminal did not report first SL positioning assistance information when entering a connected state with the network-side device last time;
(2) first SL positioning assistance information reported by the first terminal last time is not provided in positioning broadcast information;
(3) the first terminal needs to report the first SL positioning assistance information to obtain the SL positioning required information;
(4) the first SL positioning assistance information reported by the first terminal last time is not provided in the SL positioning required information;
(5) the first SL positioning assistance information reported by the first terminal last time did not include related information of the second terminal, and the related information of the second terminal includes at least one of join information that the second terminal joins SL communication with the first terminal and release information that the second terminal releases SL communication with the first terminal;
(6) the first SL positioning assistance information reported by the first terminal last time did not include any one of the first SL positioning assistance information in the item 29, specifically lacking any one of first bandwidth information (the first SL positioning assistance information in the item 1 above), first frequency information (the first SL positioning assistance information in the item 2 above), and periodicity information (the first SL positioning assistance information in the item 3 above);
(7) any one of the first SL positioning assistance information of the first terminal has changed; for example, any one of the first SL positioning assistance information in the item 29 is changed, specifically, any one of first bandwidth information (the first SL positioning assistance information in the item 1 above), first frequency information (the first SL positioning assistance information in the item 2 above), and periodicity information, (the first SL positioning assistance information in the 3rd item above) is changed.
(8) a radio link failure (Radio Link Failure, RLF) of the first terminal; and
(9) sidelink radio resource control (sidelink Radio Resource Control, SL RRC) reconfiguration failure of the first terminal.

It can be understood that in a case that the first default trigger condition is met, the first SL positioning assistance information is reported to the network-side device, so that the network-side device can configure the SL positioning required information for the first terminal when necessary, instead of blindly configuring, thereby improving the communication effectiveness.

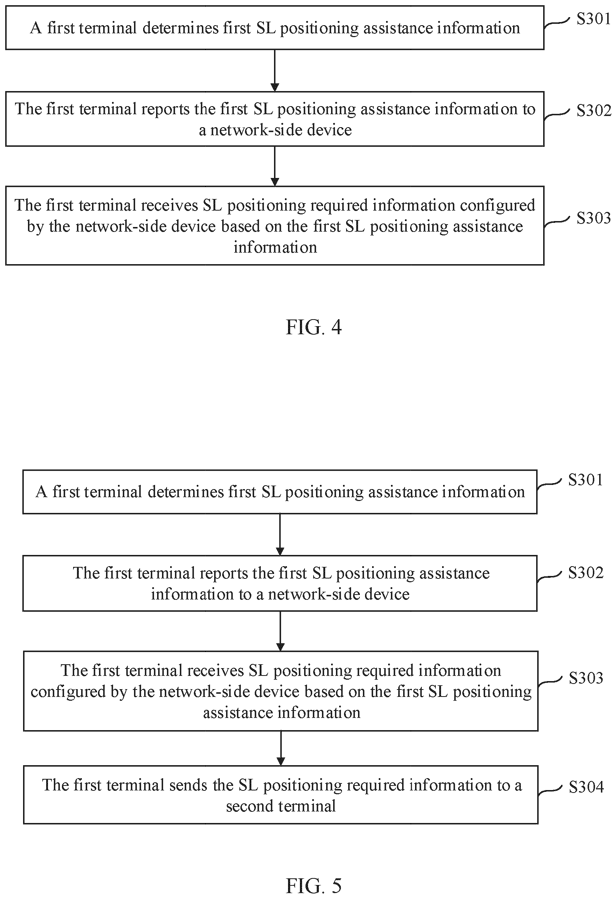

Optionally, as shown in FIG. 4, an embodiment of this application provides a communication method based on SL positioning assistance information, which, in addition to the foregoing step 301 and step 302, may further include the following steps:
Step 303: The first terminal receives the SL positioning required information configured by the network-side device based on the first SL positioning assistance information.

It can be understood that the SL positioning required information configured by the network-side device matches the first SL positioning assistance information reported by the first terminal, for example, the frequency information configured by the network side for transmitting SL-PRS should meet a request in the first SL assistance information (for example, the first terminal reports one first frequency list, and the network side selects one or more frequencies for transmitting an SL-PRS), and the resource pool configuration information configured by the network side for transmitting an SL-PRS should meet the request in the first SL assistance information (for example, a starting time or an ending time, such as the number of subchannels (subchannel)). The following describes specific content of the SL positioning required information by using an example.

In a first example, the network-side device includes a base station, and the SL positioning required information includes SL positioning configuration information. The SL positioning configuration information configured by the base station for the first terminal may include but is not limited to at least one of the following:
(1) frequency information for SL positioning, where the frequency information includes at least one of information about a first frequency, information about a first BWP, absolute frequency information, and relative frequency information; where the information about the first frequency is a frequency for SL positioning reference signal transmission, the first BWP is a BWP for SL positioning reference signal transmission, and the information about the first BWP includes frequency information of the first BWP, bandwidth information of the first BWP, and time domain position information for SL positioning reference signal transmission; where the absolute frequency information may be a point A or an absolute radio frequency channel number (Absolute Radio Frequency Channel Number, ARFCN), and the relative frequency information may be a start physical resource block (Start Physical Resource Block, start PRB);
(2) configuration information for an SL positioning resource pool;
(3) configuration information of at least one RSU, where the configuration information of the RSU includes at least one of position information of the RSU and information related to a signal transmitted by the RSU, and the information related to the signal transmitted by the RSU includes at least one of a sequence of the signal and time-frequency information of the signal;
(4) information about at least one SL positioning reference signal, where the information about the SL positioning reference signal includes a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value (comb size N) of the SL positioning reference signal and the number of slots occupied by the SL positioning reference signal;
(5) resource selection window information of at least one SL positioning reference signal, where the resource selection window information is used for selecting an SL resource by the first terminal, or the resource selection window information is used for indicating a resource selection window of the related terminal;
(6) measurement gap or measurement window for measurement on an SL positioning reference signal; and
(7) SL DRX configuration information.

Further, the SL positioning configuration information configured by the base station for the first terminal may further include but is not limited to at least one of the following:
(8) first enabling information, where the first enabling information is used to indicate enabling information of the SL positioning reference signal;
(9) measurement configuration information of the SL positioning reference signal, where the measurement configuration information is used to configure at least one of the following: at least one set of measurement configuration and at least one set of reporting configuration; and
(10) priority information of the SL positioning reference signal.

Further, the network-side device further includes an LMF, and before the base station configures the SL positioning configuration information for the first terminal, the LMF may further configure at least one of the following SL positioning configuration information for the base station:
(1) information about the first BWP;
(2) configuration information for an SL positioning resource pool;
(3) resource selection window information of the at least one SL positioning reference signal;
(4) a measurement gap or measurement window for measurement on the SL positioning reference signal; and
(5) SL DRX configuration information.

In the second example, the network-side device includes an LMF, and the SL positioning required information includes SL positioning assistance data, and the SL positioning assistance data configured for the first terminal by the LMF may include but is not limited to at least one of the following:
(1) frequency information for SL positioning, where the frequency information includes at least one of information about a first frequency, information about a first BWP, absolute frequency information, and relative frequency information, the information about the first frequency is a frequency used for SL positioning reference signal transmission;
(2) configuration information of at least one RSU, where the configuration information of the RSU includes at least one of position information of the RSU and information related to a signal transmitted by the RSU, and the information related to the signal transmitted by the RSU includes at least one of a sequence of the signal and time-frequency information of the signal; and
(3) information about at least one SL positioning reference signal, where the information about the SL positioning reference signal includes a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal;

Optionally, the SL positioning required information may further include the configuration information of the measurement gap of the related terminal, where the configuration information matches the first SL positioning assistance information in the item 19 above.

Further, the measurement gap of the related terminal is determined based on SL DRX configuration information of the related terminal, and the measurement gap of the related terminal is located in an SL DRX inactive time of the related terminal.

Optionally, as shown in FIG. 5, an embodiment of this application provides a communication method based on SL positioning assistance information, which, in addition to the foregoing step 301, step 302, and step 303, may further include the following steps:

Step 304: The first terminal sends the SL positioning required information to a second terminal.

The first terminal sends SL positioning assistance data and/or SL positioning configuration information in the SL positioning required information to the second terminal, where the number of the second terminals may be more than one.

For example, the first terminal may send SL DRX configuration information of the UE to the second terminal through UEAssistanceinformationsSideLink, so that the second terminal can learn about SL DRX information to send data.

Further, an embodiment of this application provides a communication method based on SL positioning assistance information, which may further include: in a case that the second terminal rejects configuration in the SL positioning required information, the first terminal updates the first SL positioning assistance information and reports it to the network-side device. For example, the second terminal rejects resource pool configuration information used for transmission and positioning, and a measurement gap or measurement window used for SL-PRS measurement. In this case, to implement SL positioning, the first terminal needs to report the first SL positioning assistance information again.

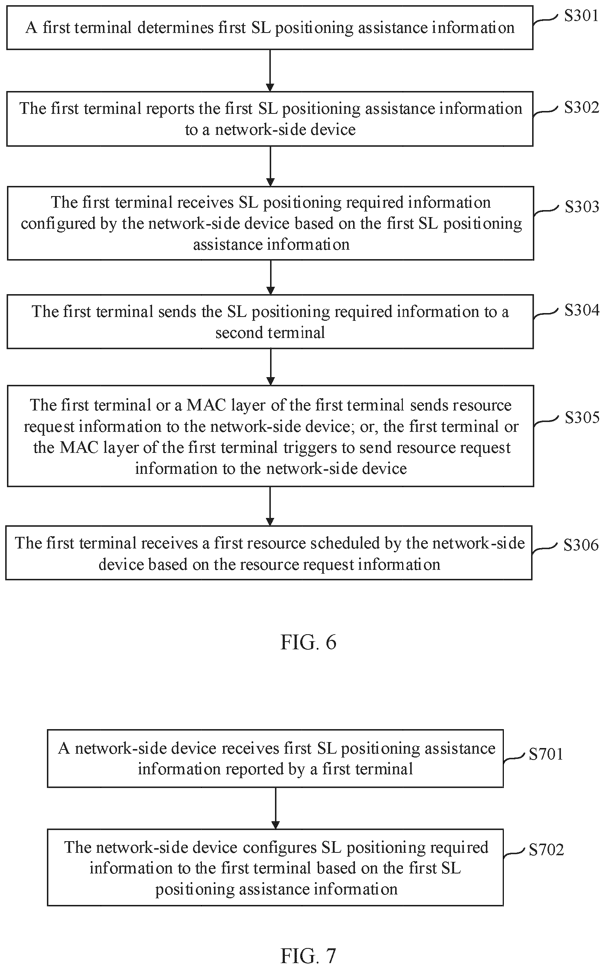

Optionally, as shown in FIG. 6, an embodiment of this application provides a communication method based on SL positioning assistance information, which, in addition to the foregoing step 301, step 302, step 303, and step 304, may further include the following:
Step 305: The first terminal or a medium access control (Medium Access Control, MAC) layer of the first terminal sends resource request information to the network-side device; or, the first terminal or the MAC layer of the first terminal triggers to send resource request information to the network-side device.

The resource request information is used to request the network-side device for a resource for transmitting SL positioning related information, and the SL positioning related information includes at least one of an SL positioning reference signal and an SL positioning reference signal measurement result.

In one example, the resource request information is used to request the network-side device for a resource for SL positioning reference signal transmission. The resource request information includes at least one of the following:
bandwidth information for SL positioning reference signal transmission;
frequency information used for SL positioning reference signal transmission;
information about the number of subchannels used for SL positioning reference signal transmission; and
period information used for SL positioning reference signal transmission, where the period information is used to indicate whether it is a periodic resource request, a specific periodic value, or the like.

In another example, the first terminal may send the resource request information through a MAC control element (Control Element, CE), more specifically, the MAC CE may be a buffer status report (Buffer Status Report, BSR), and the MAC CE is used for indicating, but not limited to, bandwidth information required for SL positioning reference signal transmission.

Further, the network-side device configures for the first terminal a plurality of selectable bandwidths and a plurality of selectable subchannels (subchannel), the resource request information is sent through a MAC CE, and the MAC CE is used to indicate at least one of the following:
a bandwidth used for SL positioning reference signal transmission in the plurality of selectable bandwidths; and
a subchannel used for SL positioning reference signal transmission in the plurality of selectable subchannels.

In addition, it should be noted that in step 305, the network-side device may be a serving cell (Pcell) of the first terminal.

Optionally, the first terminal or the MAC layer of the first terminal sends the resource request information to the network-side device in a case that a second default trigger condition is met.
the second default trigger condition includes at least one of the following:
at least one of a pending SL positioning reference signal and a pending SL-SCH to be transmitted is present in the first terminal;
the first terminal has received at least one of SL positioning request information and an SL positioning reference signal; and
a period timer for SL positioning reference signal transmission by the first terminal expires.

It can be understood that in a case that a second default trigger condition is met, the resource request information is sent to the network-side device, so that the network-side device can schedule resources as needed, thereby improving the communication effectiveness.

Optionally, as shown in FIG. 6, an embodiment of this application provides a communication method based on SL positioning assistance information, which, in addition to the foregoing step 301, step 302, step 303, step 304, and step 305, may further include the following:

Step 306: The first terminal receives a first resource scheduled by the network-side device based on the resource request information.

The first resource includes at least one of a first SL resource and a second SL resource, where the first SL resource includes an SL resource for SL positioning related information transmission, and the second SL resource includes an SL resource for sidelink shared channel SL-SCH transmission. As mentioned above, the SL positioning related information may include at least one of an SL positioning reference signal and an SL positioning reference signal measurement result.

It can be understood that after receiving the first resource scheduled by the network-side device, the first terminal may perform at least one of the following steps, but not limited to:
sending, by the first terminal, scheduling information of the first resource to the second terminal;
transmitting, by the first terminal, an SL positioning reference signal to the second terminal on the first SL resource; and
transmitting, by the first terminal, an SL positioning reference signal measurement result to the second terminal on the first SL resource.

It is not difficult to understand that SL positioning can be implemented by performing the foregoing steps, and the purpose of assisting SL positioning by the network device is also implemented.

Optionally, in specific implementation, the first terminal can report the first SL positioning assistance information to the network-side device through third information; or, the first terminal may report the first SL positioning assistance information to the network-side device through fourth information; where the third information is SidelinkUEInformationNR or UEAssistanceInformationNR, and the fourth information is different from the third information. SidelinkUEInformationNR is used to send terminal assistance data (SidelinkUEInformationNR) to the network-side device, so as to achieve one of the following purposes: reporting an SL status of each target terminal (per destination), requesting or releasing an SL resource, and reporting QoS information.

The foregoing describes a communication method based on SL assistance information applied to the first terminal provided in the embodiment of this application, and the following describes a communication method based on SL assistance information applied to the network-side device.

As shown in FIG. 7, an embodiment of this application provides a communication method based on SL positioning assistance information, where the method may include the steps.

Step 701: A network-side device receives first SL positioning assistance information reported by a first terminal.

Step 702: The network-side device configures SL positioning required information to the first terminal based on the first SL positioning assistance information.

The network-side device includes at least one of a base station and a LMF, the SL positioning required information includes at least one of SL positioning assistance data and SL positioning configuration information.

The first SL positioning assistance information includes SL positioning assistance information of one or more related terminals. The related terminal is a terminal related to SL positioning. Specifically, the related terminal may include at least one of the first terminal and a second terminal, and the second terminal includes at least one of a terminal establishing an SL connection to the first terminal and a terminal performing SL positioning related information transmission with the first terminal, where the SL positioning related information includes but is not limited to at least one of an SL positioning reference signal and an SL positioning reference signal measurement result.

In an optional embodiment, the second terminal may be one or more of a target terminal, assistance UE (an assistance terminal, that is, a terminal for assisting SL positioning), a location serving terminal (a terminal for performing a location service), reference UE (a reference terminal), and a PRU.

In an optional embodiment, the second terminal may be a terminal that is determined based on a discovery procedure and can be used for SL positioning.

Optionally, in a case that the related terminal includes a second terminal, the first SL positioning assistance information reported by the first terminal includes related information (such as SL positioning assistance information) of the second terminal, which may be because the second terminal has an SL connection to the first terminal or the first terminal detects through the discovery procedure that the second terminal can be used to assist SL positioning, and then the first SL positioning assistance information includes information of the second terminal.

It should be noted that the first terminal can be either a target terminal (a terminal that needs to be located) or an assistance terminal. In a case that the related terminal includes both the first terminal and the second terminal, if the first terminal is an assistance terminal UE, the second terminal may include a target terminal and may also include other assistance terminals.

The SL positioning assistance information is generally related information used for assisting the terminal in SL positioning by the network-side device. The following uses the first SL positioning assistance information as an example to describe what information the SL positioning assistance information can specifically include, and details are not described herein.

In the communication method based on SL positioning assistance information according to the embodiments of this application, because the first terminal reports the first SL positioning assistance information to the network-side device, the network-side device can configure the SL positioning required information for the first terminal based on the first SL positioning assistance information, and the SL positioning required information includes at least one of SL positioning assistance data and SL positioning configuration information, so that the network-side device can implement at least one of purposes of assisting SL positioning and configuring appropriate resources for SL positioning.

The following uses the first SL positioning assistance information as an example to describe what information the SL positioning assistance information can specifically include.

In one example, the first SL positioning assistance information may include at least one of the following:
(1) First bandwidth information, used to indicate a desired (Preferred) bandwidth for SL positioning reference signal transmission for the related terminal.
(2) First frequency information, used to indicate frequency information that is preferred for SL positioning reference signal transmission for the related terminal.
(3) Periodicity information, used to indicate information about a periodicity that is preferred for SL positioning reference signal transmission for the related terminal, such as information such as an SL PRS transmission (event trigger) period and an SL positioning measurement result event report (event report) period; optionally, in an embodiment, the period information may also include information for indicating whether transmission of the SL positioning related information is periodic, such as for one time or being periodic.
(4) At least one of positioning service indication information and positioning request indication information of the related terminal; where the positioning service indication information is used to indicate a positioning request carried in an application layer or the location server; the positioning request indication information may be used to indicate a requirement (requirement) of the positioning service, the requirement of the positioning service specifically includes but is not limited to at least one of the following: accuracy, delay, priority, reliability, energy consumption, and the like, so that the network-side device can determine a corresponding resource configuration according to the requirement of the positioning service. The requirement of the positioning service may be directly reported by the related terminal, or indirectly reported by using a project quality index (Project Quality Index, PQI) or other quality of service (Quality of Service, QoS) ID. In addition, during reporting of the requirement of the positioning service, it can be associated through a mechanism similar to an SL BSR destination index (destination index).
(5) An ID of the second terminal, where the ID of the second terminal may be at least one of a destination ID (destination ID), a member ID (member ID), a 5G-S-TMSI, application layer identification information, a C-RNTI, and the like. If the second terminal is an assistance terminal, optionally, location information of the second terminal may also be included.
(6) First time interval information corresponding to the related terminal, where the first time interval information includes at least one of first transmission time interval information and second transmission time interval information, where the first transmission time interval information is transmission time interval information of a first SL positioning reference signal and a second SL positioning reference signal, the second transmission time interval information is maximum transmission interval information of measurement result reporting information of the first SL positioning reference signal and first information, the first SL positioning reference signal is an SL positioning reference signal sent by the related terminal, the second SL positioning reference signal is an SL positioning reference signal received by the related terminal, and the first information includes at least one of SL positioning request information and SL positioning measurement information.
(7) Transmission time information that is preferred for SL positioning reference signal transmission for the related terminal, where the transmission time information includes at least one of a transmission start time and a transmission end time.
(8) SL positioning reference signal resource selection window information that is preferred for the related terminal.
(9) An SL positioning reference signal configuration that is preferred for the related terminal.
(10) An SL positioning reference signal configuration that is not preferred (nonpreferred) by the related terminal;
(11) An SL positioning reference signal transmission resource set preferred for the related terminal.
(12) An SL positioning reference signal transmission resource set not preferred for the related terminal.
(13) A requested or released resource for SL positioning for the related terminal.
(14) Configuration information of an SL positioning dedicated resource pool that is preferred for the related terminal.

It is easy to learn that most of the foregoing 14 pieces of information are related to transmission of the SL positioning reference signal. Therefore, in a case that the first SL positioning assistance information includes at least one of the foregoing 14 pieces of information, the network-side device can configure the related information of the SL positioning reference signal for the first terminal based on the foregoing 14 pieces of information.

In addition, the foregoing information may be related to one or more second terminals; therefore, the first SL positioning assistance information includes identification information of one or more second terminals, and the network-side device can select an appropriate second terminal to help the first terminal or the target terminal perform SL positioning.

Optionally, the first SL positioning assistance information may further include at least one of the following:
(15) First frequency indication information.
(16) First BWP indication information.

The first frequency indication information is used for indicating at least one of a first frequency and a first frequency list, where the first frequency is a frequency that is preferred for SL positioning reference signal transmission for the related terminal, the first frequency list is a frequency list that is preferred for SL positioning reference signal transmission for the related terminal, and in a case that the first frequency is different from a second frequency, the first SL positioning assistance information includes the first frequency indication information and the second frequency is a frequency used for sidelink shared channel (sidelink shared channel, SL-SCH) transmission. That is, in a case that a channel for transmitting SL data and a frequency for SL positioning reference signal transmission are different, it may include first frequency indication information and second frequency indication information respectively.

As one example, the first frequency indication information may include, but is not limited to, at least one of the following information:
① a position of the first frequency in the first frequency list;
② absolute frequency information corresponding to the first frequency and relative frequency information corresponding to the first frequency;
③ the first frequency indication information is used to indicate or assist the network-side device to configure a dedicated first frequency; and
④ frequency domain information of the first frequency relative to the second frequency.

The first BWP indication information is used to indicate a first BWP, where the first BWP is a BWP that is preferred for SL positioning reference signal transmission for the related terminal, and in a case that the first BWP is different from a second BWP, the first SL positioning assistance information includes the first BWP indication information, and the second BWP is a BWP used by the related terminal for transmitting an SL-SCH. That is, in a case that a channel for transmitting SL data and a frequency for SL positioning reference signal transmission are different, it may include first BWP indication information and second BWP indication information respectively.

As one example, the first BWP indication information may include but is not limited to at least one of the following information:
① a frequency domain position of the first BWP;
② a bandwidth of the first BWP;
③ a subcarrier spacing SCS corresponding to the first BWP;
④ a symbol position corresponding to the first BWP and for transmitting SL positioning related information;
⑤ a time domain position corresponding to the first BWP and for transmitting SL positioning related information; and
⑥ the first BWP indication information is used to indicate or assist the network-side device to configure a dedicated first BWP.

It is easy to learn that the items 15 and 16 of information are about the frequency and BWP for transmitting the SL positioning reference signal, respectively. Therefore, in a case that the first SL positioning assistance information includes the items 15 and 16 of information, the network-side device may configure, for the first terminal based on the items 15 and 16 of information, the frequency information and BWP for transmitting at least one of the SL positioning reference signal and the SL positioning information.

Optionally, the first SL positioning assistance information may further include at least one of the following:
(17) Sidelink discontinuous reception (sidelink Discontinuous Reception, SL DRX) configuration information of the related terminal.
(18) Whether the related terminal supports transmission of an SL positioning reference signal during an inactive time.

The SL DRX configuration information may include but is not limited to at least one of the following:
① an SL DRX cycle;
④ a time length of an SL DRX onduration; and
③ a starting position of the SL DRX onduration.

Whether the related terminal supports transmission of an SL positioning reference signal during the inactive time is a capability of the related terminal, and the related terminal with such capability supports transmission of an SL positioning reference signal in the inactive time, while the related terminal without such capability does not support transmission of an SL positioning reference signal in the inactive time. Generally, SL DRX has two states: off and on, the off state is an inactive state and the on state is an active state.

It is not difficult to learn that the items 17 and 18 of information are related to SL DRX. Therefore, in a case that the first SL positioning assistance information includes the items 17 and 18 of information, the network-side device can configure the SL DRX configuration information for the first terminal based on the items 17 and 18 of information. Alternatively, based on the items 17 and 18 of information, the network-side device can avoid scheduled or configured resources for transmitting the SL positioning reference signal from being located at a DRX off time. In addition, optionally, the network-side device can determine the SL DRX configuration information based on the items 17 and 18 of information and DRX configuration information of the Uu interface, that is, aligning SL DRX with Uu DRX. Further, in a case that the first SL positioning assistance information includes the items 17 and 18 of information, the network-side device may configure, based on the items 17 and 18 of information for the first terminal, the SL positioning required information determined for the second terminal based on the SL DRX configuration information, so as to assist the first terminal and the second terminal in completing SL positioning.

Optionally, the first SL positioning assistance information may further include at least one of the following:
(19) Configuration information of a measurement gap (measurement gap) of the related terminal.
(20) Whether the related terminal supports transmission of an SL positioning reference signal within an active time of the measurement gap.

The configuration information of the measurement gap includes but is not limited to at least one of the following:
① a period of the measurement gap; and
② a length of a duration of the measurement gap; and
③ a starting position of the duration of the measurement gap.

It is not difficult to learn that both the items 19 and 20 of information are related to the measurement gap of the related terminal. Therefore, in an embodiment, in a case that the first SL positioning assistance information includes the items 19 and 20 of information, the network-side device may configure for the first terminal the measurement gap of the related terminal based on the items 19 and 20 of information, so as to assist the related terminal in completing measurement on an SL positioning reference signal within the measurement gap. In another embodiment, in a case that the first SL positioning assistance information includes the items 19 and 20 of information, the network-side device can avoid scheduled or configured resources for transmitting the SL positioning reference signal from being located at the measurement gap, based on the items 19 and 20 of information. Further, in a case that the first SL positioning assistance information includes the items 19 and 20 of information, the network-side device may configure, based on the items 19 and 20 of information for the first terminal, the SL positioning required information determined for the second terminal based on the measurement gap, so as to assist the first terminal and the second terminal in completing SL positioning.

Optionally, the first SL positioning assistance information may further include at least one of the following:
(21) synchronization deviation information between the second terminal and the first terminal;
(22) synchronization source indication information of the second terminal; and
(23) serving cell identification information of the second terminal.

It can be learned that the items 21 to 23 of information are related to the synchronization information of the second terminal. Therefore, in an optional implementation, in a case that the first SL positioning assistance information includes the items 21 to 23 of information, the network-side device may configure related synchronization information of the second terminal for the first terminal based on the items 21 to 23 of information, so as to assist the second terminal in completing measurement of the SL positioning reference signal. In another optional implementation, in a case that the first SL positioning assistance information includes the items 21 to 23 of information, the network-side device may determine, based on the items 21 to 23 of information, scheduled or configured resources for transmitting the SL positioning reference signal or measuring the SL positioning reference signal, that is, the synchronization information is considered so as to determine resources for transmitting the SL positioning reference signal or measuring the SL positioning reference signal. Further, in a case that the first SL positioning assistance information includes the 21st and 23rd items of information, the network-side device may configure, based on the 21st and 23rd items of information for the first terminal, the SL positioning required information determined for the second terminal based on the synchronization information, so as to assist the first terminal and the second terminal in completing SL positioning.

Optionally, the first SL positioning assistance information may further include:
(24) The first SL positioning assistance information further includes preset capability information of the second terminal.

The preset capability information of the second terminal includes at least one of the following:
① whether the second terminal supports configuring the first frequency to transmit an SL positioning reference signal;
② whether the second terminal supports configuring the first BWP to transmit an SL positioning reference signal;
③ the number of SL positioning reference signals that the second terminal is able to measure in a single slot; for example, the number may be 1, 2, 4, 6, 8, 16, 24, 32, or the like;
④ the number of SL positioning reference signals that the second terminal is able to send in a single slot; for example, the number may be 1, 2, 4, 6, 8, 16, 24, 32, or the like;
⑤ whether the second terminal supports simultaneous sending and reception of SL positioning reference signals in a single slot;
⑥ second time interval information corresponding to the second terminal, where the second time interval information is time interval information between sending of an SL positioning reference signal and reception of an SL positioning reference signal;
⑦ third time interval information corresponding to the second terminal, where the third time interval information is time interval information between SL positioning reference signal transmission and sidelink shared channel SL-SCH transmission;
⑧ information about whether the second terminal supports simultaneous transmission of an SL positioning reference signal and an SL-SCH; and
⑨ whether the second terminal supports simultaneous measurement of an SL positioning reference signal and a Uu signal.

Further, in a case that the preset capability information of the second terminal includes information about whether the second terminal supports simultaneous transmission of the SL positioning reference signal and the SL-SCH (the foregoing ⑧ capability), the foregoing ⑧ capability may specifically include, but is not limited to, at least one of the following capabilities:
a) whether the second terminal supports simultaneous transmission of an SL positioning reference signal and an SL-SCH on the first frequency or a single frequency;
b) whether the second terminal supports simultaneous transmission of an SL positioning reference signal and an SL-SCH on the first BWP or a single BWP;
c) a frequency of the first BWP supported by the second terminal is the same as or different from a frequency of the second BWP, and the second BWP is a BWP used for sidelink shared channel SL-SCH transmission for the related terminal;
d) power control capability information of the second terminal;
e) information about a maximum number of SL positioning reference signal resources supported by the second terminal on one BWP; and
f) information about a maximum number of SL positioning reference signal resources supported by the second terminal on one BWP and one slot.

It can be seen that the item 24 of information is related to the preset capability of the second terminal. In a case that the first SL positioning assistance information includes the item 24 of information, the network-side device may configure, for the first terminal based on the item 24 of information, SL positioning required information matching the preset capability of the second terminal, so as to assist the first terminal and the second terminal in completing SL positioning.

Optionally, the first SL positioning assistance information may further include:
(25) Positioning mode information used by the related terminal.

The positioning mode information used by the related terminal is used but not limited to indicate at least one of the following information:
① only SL positioning;
② hybrid positioning, such as Uu+SL positioning;
③ sensor information;
④ relative positioning indication information;
⑤ absolute positioning indication information;
⑥ information about a reference point, where the reference point includes at least one of a reference terminal and a reference transmission and reception point TRP; and
⑦ a zone ID (zone ID).

It can be understood that in a case that the first SL positioning assistance information includes the item 25 of information, the network-side device may configure, for the first terminal based on the item 25 of information, positioning required information matching a positioning mode used by the related terminal, so as to assist the related terminal in completing related positioning. Alternatively, the network-side device may determine a positioning mode used by the first terminal and the related terminal based on the item 25 of information, so as to request the related terminal to complete the related positioning by using the positioning mode.

Optionally, the first SL positioning assistance information may further include:
(26) assistance information related to a road side unit (Road side unit, RSU), where the RSU is for establishing SL communication with the related terminal, and/or the RSU is an RSU selected by the related terminal for assisting SL positioning.

The assistance information related to the RSU includes but is not limited to at least one of the following:
① whether the related terminal supports RSU-assisted positioning;
② identification information of the RSU;
③ measurement information of the RSU, where the measurement information may include but is not limited to at least one of energy information, time information, and angle information; and
④ position information of the RSU.

It can be understood that in a case that the first SL positioning assistance information includes the item 26 of information, the network-side device may determine, based on the item 26 of information, related configuration information of the RSU for assisting the first terminal or the target terminal, so as to assist the related terminal in completing SL positioning.

Optionally, the first SL positioning assistance information may further include at least one of the following two items:
(27) configuration failure indication information of second information; and
(28) configuration refusal indication information for refusing configuration of the second information.

The second information may include, but is not limited to, at least one of the following:
① measurement gap or measurement window for measurement on an SL positioning reference signal;
② indicating information of a first SL resource, where the first SL resource includes an SL resource for SL positioning related information transmission;
③ SL DRX configuration information.
④ configuration information of the first frequency, where the first frequency is a frequency used for SL positioning reference signal transmission;
⑤ configuration information of a first BWP, where the first BWP is a BWP for SL positioning reference signal transmission; and
⑥ configuration information of a first bandwidth, where the first bandwidth is a bandwidth used for SL positioning reference signal transmission.

It can be understood that in a case that the first SL positioning assistance information includes at least one of the items 27 and 28 of information, the network-side device can learn about a case of a configuration failure or configuration refusal of the second information in a timely manner, so as to adjust configuration of the second information in a timely manner.

Optionally, the first SL positioning assistance information may further include:
(29) timing error group (timing error group, TEG) related information.

The TEG related information includes at least one of the following:
① an association list of TEGs and SL positioning reference signals may include the following fields: TEG ID, time stamp, and SL positioning reference signal;
② TEG type, where the TEG type includes at least one of the following: TX TEG, RX TEG, and RXTXTEG;
③ an ID of the related terminal; and
④ identification information of the SL positioning reference signal.

It can be understood that in a case that the foregoing first SL positioning assistance information includes at least one item of information in the foregoing item (29), the network-side device can adjust the related timing accordingly and then configure it after adjustment. Alternatively, the network-side device may request a related terminal or SL positioning reference signal accordingly, so as to reduce influence of the TEG.

Using the first SL positioning assistance information as an example, content contained in the SL positioning assistance information is listed above. It should be noted that in addition to the content listed in the item (29) above, the SL positioning assistance information may also contain other content not listed, and the content not listed also falls within a scope included by the SL positioning assistance information.

Optionally, the foregoing step 701 may specifically include: the network-side device receives the first SL positioning assistance information reported by the first terminal in a case that a first default trigger condition is met.

For content of the first default trigger condition, refer to the foregoing. Details are not repeated here.

It can be understood that in a case that the first default trigger condition is met, the first SL positioning assistance information is reported to the network-side device, so that the network-side device can configure the SL positioning required information for the first terminal when necessary, instead of blindly configuring, thereby improving the communication effectiveness.

It can be understood that the SL positioning required information configured by the network-side device matches the first SL positioning assistance information reported by the first terminal, for example, the frequency information configured by the network side for transmitting SL-PRS should meet a request in the first SL assistance information (for example, the first terminal reports one first frequency list, and the network side selects one or more frequencies for transmitting an SL-PRS), and the resource pool configuration information configured by the network side for transmitting an SL-PRS should meet the request in the first SL assistance information (for example, a starting time or an ending time, such as the number of subchannels). The following describes specific content of the SL positioning required information by using an example.

In a first example, the network-side device includes a base station, and the SL positioning required information includes SL positioning configuration information. The SL positioning configuration information configured by the base station for the first terminal may include but is not limited to at least one of the following:
(1) frequency information for SL positioning, where the frequency information includes at least one of information about a first frequency, information about a first BWP, absolute frequency information, and relative frequency information; where the information about the first frequency is a frequency for SL positioning reference signal transmission, the first BWP is a BWP for SL positioning reference signal transmission, and the information about the first BWP includes frequency information of the first BWP, bandwidth information of the first BWP, and time domain position information for SL positioning reference signal transmission; where the absolute frequency information may be a point A or an absolute radio frequency channel number (Absolute Radio Frequency Channel Number, ARFCN), and the relative frequency information may be a start physical resource block (Start Physical Resource Block, start PRB);
(2) configuration information for an SL positioning resource pool;
(3) configuration information of at least one RSU, where the configuration information of the RSU includes at least one of position information of the RSU and information related to a signal transmitted by the RSU, and the information related to the signal transmitted by the RSU includes at least one of a sequence of the signal and time-frequency information of the signal;
(4) information about at least one SL positioning reference signal, where the information about the SL positioning reference signal includes a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value (comb size N) of the SL positioning reference signal and the number of slots occupied by the SL positioning reference signal;
(5) resource selection window information of at least one SL positioning reference signal, where the resource selection window information is used for selecting an SL resource by the first terminal, or the resource selection window information is used for indicating a resource selection window of the related terminal;
(6) measurement gap or measurement window for measurement on an SL positioning reference signal; and
(7) SL DRX configuration information.

Further, the SL positioning configuration information configured by the base station for the first terminal may further include but is not limited to at least one of the following:
(8) first enabling information, where the first enabling information is used to indicate enabling information of the SL positioning reference signal;
(9) measurement configuration information of the SL positioning reference signal, where the measurement configuration information is used to configure at least one of the following: at least one set of measurement configuration and at least one set of reporting configuration; and
(10) priority information of the SL positioning reference signal.

Further, the network-side device further includes an LMF, and before the base station configures the SL positioning configuration information for the first terminal, the LMF may further configure at least one of the following SL positioning configuration information for the base station:
(1) information about the first BWP;
(2) configuration information for an SL positioning resource pool;
(3) resource selection window information of the at least one SL positioning reference signal;
(4) a measurement gap or measurement window for measurement on the SL positioning reference signal; and
(5) SL DRX configuration information.

In the second example, the network-side device includes an LMF, and the SL positioning required information includes SL positioning assistance data, and the SL positioning assistance data configured for the first terminal by the LMF may include but is not limited to at least one of the following:
(1) frequency information for SL positioning, where the frequency information includes at least one of information about a first frequency, information about a first BWP, absolute frequency information, and relative frequency information, the information about the first frequency is a frequency used for SL positioning reference signal transmission;
(2) configuration information of at least one RSU, where the configuration information of the RSU includes at least one of position information of the RSU and information related to a signal transmitted by the RSU, and the information related to the signal transmitted by the RSU includes at least one of a sequence of the signal and time-frequency information of the signal; and
(3) information about at least one SL positioning reference signal, where the information about the SL positioning reference signal includes a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal;

Optionally, the SL positioning required information may further include the configuration information of the measurement gap of the related terminal, where the configuration information matches the first SL positioning assistance information in the item 19 above.

Further, the measurement gap of the related terminal is determined based on SL DRX configuration information of the related terminal, and the measurement gap of the related terminal is located in an SL DRX inactive time of the related terminal.

Optionally, an embodiment of this application provides a communication method based on SL positioning assistance information, further including: receiving, by the network-side device, updated first SL positioning assistance information reported by the first terminal, where the first SL positioning assistance information is updated by the first terminal in a case that the second terminal rejects configuration in the SL positioning required information.

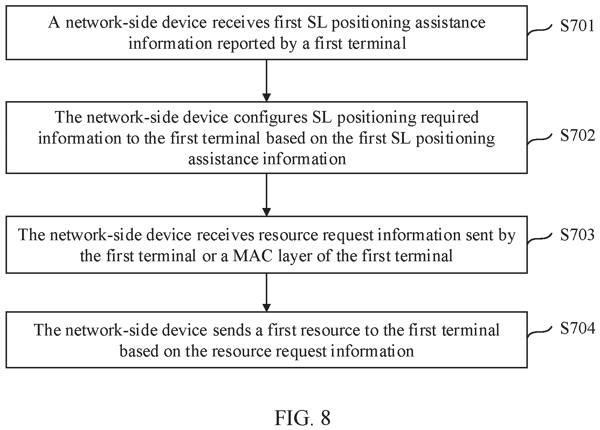

Optionally, as shown in FIG. 8, an embodiment of this application provides a communication method based on SL positioning assistance information, which, in addition to the foregoing step 701 and step 702, may further include the following steps:
Step 703: The network-side device receives resource request information sent by the first terminal or a MAC layer of the first terminal.

The resource request information is used to request the network-side device for a resource for transmitting SL positioning related information, and the SL positioning related information includes at least one of an SL positioning reference signal and an SL positioning reference signal measurement result.

In one example, the resource request information is used to request the network-side device for a resource for SL positioning reference signal transmission. The resource request information includes at least one of the following:
bandwidth information for SL positioning reference signal transmission;
frequency information used for SL positioning reference signal transmission;
information about the number of subchannels used for SL positioning reference signal transmission; and
period information used for SL positioning reference signal transmission, where the period information is used to indicate whether it is a periodic resource request, a specific periodic value, or the like.

In another example, the first terminal may send the resource request information through a MAC CE, more specifically, the MAC CE may be a buffer status report (Buffer Status Report, BSR), and the MAC CE is used for indicating, but not limited to, bandwidth information required for SL positioning reference signal transmission.

Further, the network-side device configures for the first terminal a plurality of selectable bandwidths and a plurality of selectable subchannels (subchannel), the resource request information is sent through a MAC CE, and the MAC CE is used to indicate at least one of the following:
a bandwidth used for SL positioning reference signal transmission in the plurality of selectable bandwidths; and
a subchannel used for SL positioning reference signal transmission in the plurality of selectable subchannels.

In addition, it should be noted that in step 703, the network-side device may be a serving cell (Pcell) of the first terminal.

Optionally, the resource request information is sent by the first terminal or the MAC layer of the first terminal in a case that a second default trigger condition is met.
the second default trigger condition includes at least one of the following:
at least one of a pending SL positioning reference signal and a pending SL-SCH to be transmitted is present in the first terminal;
the first terminal has received at least one of SL positioning request information and an SL positioning reference signal; and
a period timer for SL positioning reference signal transmission by the first terminal expires.

It can be understood that in a case that a second default trigger condition is met, the resource request information is sent to the network-side device, so that the network-side device can schedule resources as needed, thereby improving the communication effectiveness.

Optionally, as shown in FIG. 8, an embodiment of this application provides a communication method based on SL positioning assistance information, which, in addition to the foregoing step 701, step 702, and step 703, may further include the following steps:
Step 704: The network-side device sends a first resource to the first terminal based on the resource request information.

The first resource includes at least one of a first SL resource and a second SL resource, where the first SL resource includes an SL resource for SL positioning related information transmission, and the second SL resource includes an SL resource for sidelink shared channel SL-SCH transmission. As mentioned above, the SL positioning related information may include at least one of an SL positioning reference signal and an SL positioning reference signal measurement result.

It can be understood that after receiving the first resource scheduled by the network-side device, the first terminal may perform at least one of the following steps, but not limited to:
sending, by the first terminal, scheduling information of the first resource to the second terminal;
transmitting, by the first terminal, an SL positioning reference signal to the second terminal on the first SL resource; and
transmitting, by the first terminal, an SL positioning reference signal measurement result to the second terminal on the first SL resource.

It is not difficult to understand that SL positioning can be implemented by performing the foregoing steps, and the purpose of assisting SL positioning by the network device is also implemented.

Optionally, the step 701 may specifically include: the network-side device receives the first SL positioning assistance information reported by the first terminal through third information; or, the network-side device receives the first SL positioning assistance information reported by the first terminal through fourth information.

The third information is SidelinkUEInformationNR or UEAssistanceInformationNR, and the fourth information is different from the third information.

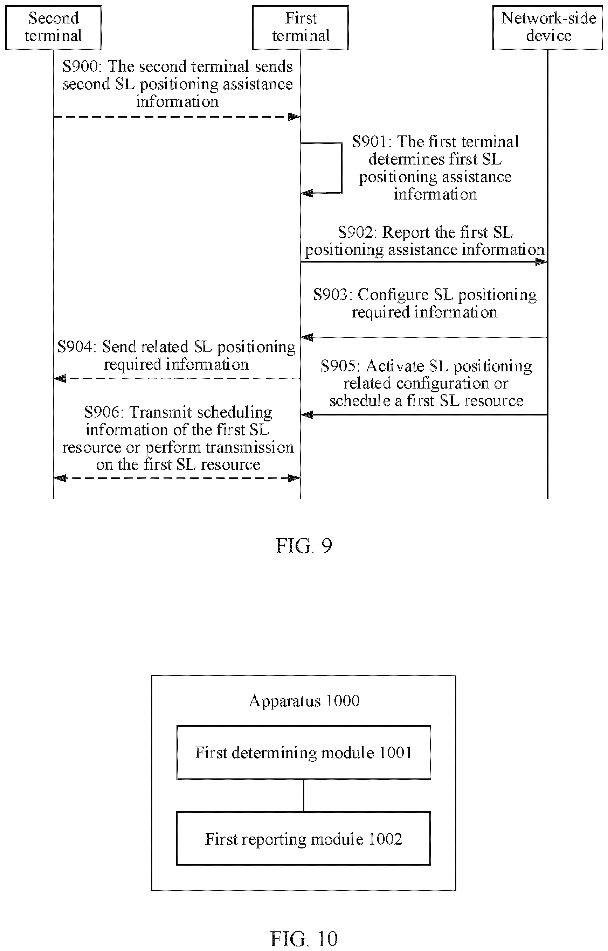

The foregoing describes a communication method based on SL assistance information applied to the network-side device provided in the embodiments of this application. The following describes an application example of a communication method based on SL assistance information provided in an embodiment of this application with reference to FIG. 9.

As shown in FIG. 9, the interaction process of a communication method based on SL assistance information provided in this embodiment of this application may include:
Step 900: The second terminal sends the second SL positioning assistance information to the first terminal.

Refer to the foregoing for the definition of the second SL positioning assistance information, where the second SL positioning assistance information is used to determine the first SL positioning assistance information.

Step 901: A first terminal determines first SL positioning assistance information.

Refer to the foregoing for specific information contained in the first SL positioning assistance information.

Step 902: The first terminal reports the first SL positioning assistance information to the network-side device.

Step 903: The network-side device configures SL positioning required information for the first terminal based on the first SL positioning assistance information.

Step 904: The first terminal sends related SL positioning required information to the second terminal.

For example, the first terminal may send SL DRX configuration information of the UE to the second terminal through UEAssistanceinformationsSideLink, so that the second terminal can learn about SL DRX information to send data.

Step 905: The network-side device activates SL positioning related configuration information configured for the first terminal and/or schedules a first SL resource.

Step 906: The first terminal transmits scheduling information of the first SL resource to the second terminal, or the first terminal performs transmission on the first SL resource.

That the first terminal performs transmission on the first SL resource may include that: the first terminal transmits at least one of the SL positioning reference signal and the SL positioning reference signal to the second terminal on the first SL resource.

It is not difficult to learn from the embodiment shown in FIG. 9 that in the communication method based on SL assistance information according to the embodiments of this application, because the first terminal reports the first SL positioning assistance information to the network-side device, the network-side device can configure the SL positioning required information for the first terminal based on the first SL positioning assistance information, and the SL positioning required information includes at least one of SL positioning assistance data and SL positioning configuration information, so that the network-side device can implement the purpose of assisting SL positioning.

The execution subject of the communication method based on SL positioning assistance information provided in the embodiments of this application may be a communication apparatus based on SL positioning assistance information. In the embodiments of this application, the communication apparatus based on SL positioning assistance information provided in the embodiments of this application is described by using the communication method based on SL positioning assistance information being executed by the communication apparatus based on SL positioning assistance information as an example.

The following describes the communication apparatus based on SL positioning assistance information provided in the embodiments of this application with reference to the accompanying drawings. The communication apparatus based on SL positioning assistance information provided in the embodiments of this application corresponds to the communication method based on SL positioning assistance information provided in the embodiments of this application, the communication apparatus based on SL positioning assistance information provided in the embodiments of this application is described briefly. For details, refer to the description of the foregoing method embodiments.

As shown in FIG. 10, an embodiment of this application provides a communication apparatus 1000 based on SL positioning assistance information, and the apparatus 1000 may include a first determining module 1001 and a first reporting module 1002.

The first determining module 1001 is configured to determine first SL positioning assistance information.

The first reporting module 1002 is configured to report the first SL positioning assistance information to a network-side device; where
the network-side device includes at least one of a base station and a location management function LMF, the first SL positioning assistance information is used for configuring SL positioning required information for the first terminal by the network-side device, and the SL positioning required information includes at least one of SL positioning assistance data and SL positioning configuration information.

The first SL positioning assistance information includes SL positioning assistance information of one or more related terminals. The related terminal is a terminal related to SL positioning. Specifically, the related terminal may include at least one of the first terminal and a second terminal, and the second terminal includes at least one of a terminal establishing an SL connection to the first terminal and a terminal performing SL positioning related information transmission with the first terminal, where the SL positioning related information includes but is not limited to at least one of an SL positioning reference signal and an SL positioning reference signal measurement result.

The SL positioning assistance information is generally related information used for assisting the terminal in SL positioning by the network-side device. The following uses the first SL positioning assistance information as an example to describe what information the SL positioning assistance information can specifically include, and details are not described herein.

Optionally, in a case that the related terminal includes a second terminal, the first SL positioning assistance information reported by the first terminal includes the SL positioning assistance information (which may be referred to as second SL positioning assistance information) of the second terminal, so the apparatus 1000 shown in FIG. 10 may further include an information receiving module configured to receive second SL positioning assistance information sent by the second terminal, where the second SL positioning assistance information is used for determining the first SL positioning assistance information by the first terminal. More specifically, the second SL positioning assistance information is used for determining by the first terminal that the first SL positioning assistance information contains the SL positioning assistance information of the second terminal.

For specific information contained in the first SL positioning assistance information, refer to the foregoing, which is not repeated herein.

Optionally, in a specific embodiment, the first reporting module 1002 can be configured to report the first SL positioning assistance information to the network-side device in a case that a first default trigger condition is met.

For content contained in the first default trigger condition, refer to the foregoing description of the method embodiment, which is not repeated herein.

It should be noted that the apparatus shown in FIG. 10 is capable of implementing the method shown in FIG. 3A, with the same technical effects achieved, so the description is relatively simple. For related content, refer to the foregoing description of the embodiment shown in FIG. 3A.

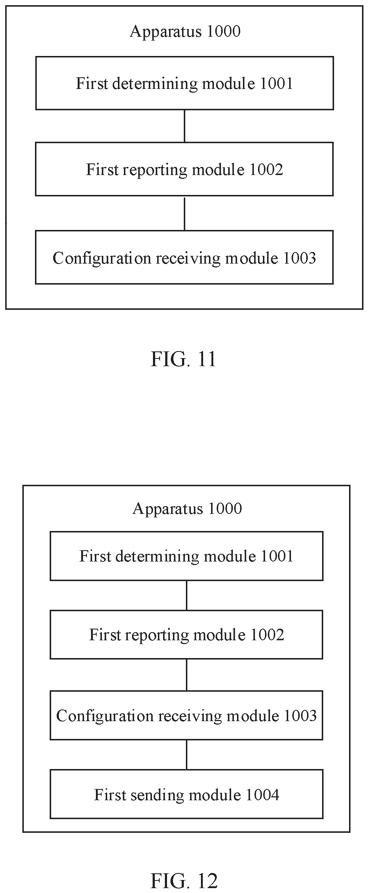

Optionally, as shown in FIG. 11, an embodiment of this application provides a communication apparatus 1000 based on SL positioning assistance information, which includes a configuration receiving module 1003 in addition to the first determining module 1001 and the first reporting module 1002.

The configuration receiving module 1003 is configured to receive the SL positioning required information configured by the network-side device based on the first SL positioning assistance information.

The SL positioning required information configured by the network-side device matches the first SL positioning assistance information reported by the first terminal. For specific content of the SL positioning required information configured by the network-side device for the first terminal, refer to the method embodiment above, which is not repeated herein.

It should be noted that the apparatus shown in FIG. 11 is capable of implementing the method shown in FIG. 4, with the same technical effects achieved, so the description is relatively simple. For related content, refer to the foregoing description of the embodiment shown in FIG. 4.

Optionally, as shown in FIG. 12, an embodiment of this application provides a communication apparatus 1000 based on SL positioning assistance information, including not only the first determining module 1001, the first reporting module 1002, and the configuration receiving module 1003, but also a first sending module 1004 configured to send the SL positioning required information to the second terminal.

Further, in a case that the second terminal rejects configuration in the SL positioning required information, the first terminal updates the first SL positioning assistance information and reports it to the network-side device.

It should be noted that the apparatus shown in FIG. 12 is capable of implementing the method shown in FIG. 5, with the same technical effects achieved, so the description is relatively simple. For related content, refer to the foregoing description of the embodiment shown in FIG. 5.

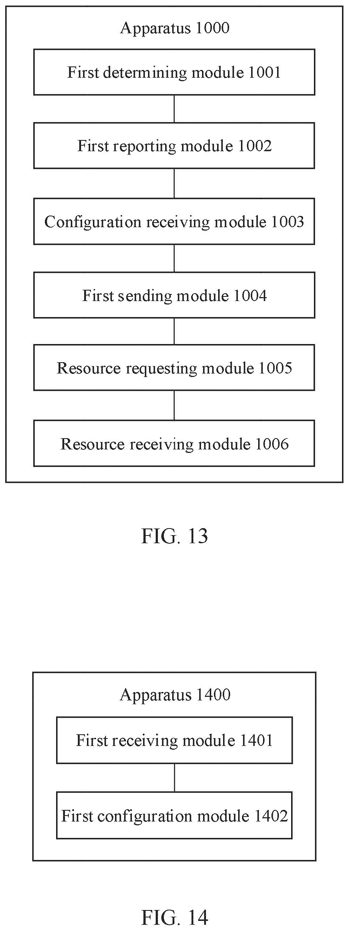

Optionally, as shown in FIG. 13, an embodiment of this application provides a communication apparatus 1000 based on SL positioning assistance information, including not only the first determining module 1001, the first reporting module 1002, the configuration receiving module 1003, and the first sending module 1004, but also a resource requesting module 1005 configured to send resource request information to the network-side device; or, a first terminal or a MAC layer of the first terminal triggers to send resource request information to the network-side device.

The resource request information is used to request the network-side device for a resource for transmitting SL positioning related information, and the SL positioning related information includes at least one of an SL positioning reference signal and an SL positioning reference signal measurement result.

Optionally, the first terminal or the MAC layer of the first terminal sends the resource request information to the network-side device in a case that a second default trigger condition is met. For specific content of the second default trigger condition, refer to the foregoing, which is not repeated herein.

Optionally, as shown in FIG. 13, an embodiment of this application provides a communication apparatus 1000 based on SL positioning assistance information, which may further include a resource receiving module 1006 for receiving a first resource scheduled by a network-side device based on resource request information.

The first resource includes at least one of a first SL resource and a second SL resource, where the first SL resource includes an SL resource for SL positioning related information transmission, and the second SL resource includes an SL resource for sidelink shared channel SL-SCH transmission. As mentioned above, the SL positioning related information may include at least one of an SL positioning reference signal and an SL positioning reference signal measurement result.

Optionally, in specific implementation, the first reporting module 1002 can report the first SL positioning assistance information to the network-side device through third information; or, the first reporting module 1002 may report the first SL positioning assistance information to the network-side device through fourth information; where the third information is SidelinkUEInformationNR or UEAssistanceInformationNR, and the fourth information is different from the third information.

It should be noted that the apparatus shown in FIG. 13 is capable of implementing the method shown in FIG. 6, with the same technical effects achieved, so the description is relatively simple. For related content, refer to the foregoing description of the embodiment shown in FIG. 6.

As shown in FIG. 14, an embodiment of this application provides a communication apparatus 1400 based on SL positioning assistance information, and the apparatus 1400 may include a first receiving module 1401 and a first configuration module 1402.

The first receiving module 1401 is configured for the network-side device to receive first SL positioning assistance information reported by a first terminal.

The network-side device includes at least one of a base station and a location management function LMF.

The first configuration module 1402 is configured for the network-side device to configure SL positioning required information based on the first SL positioning assistance information for the first terminal, where the SL positioning required information includes at least one of SL positioning assistance data and SL positioning configuration information.

The first SL positioning assistance information includes SL positioning assistance information of one or more related terminals. The related terminal is a terminal related to SL positioning. Specifically, the related terminal may include at least one of the first terminal and a second terminal, and the second terminal includes at least one of a terminal establishing an SL connection to the first terminal and a terminal performing SL positioning related information transmission with the first terminal, where the SL positioning related information includes but is not limited to at least one of an SL positioning reference signal and an SL positioning reference signal measurement result.

For specific content contained in the first SL positioning assistance information, refer to the foregoing, which is not repeated herein.

It should be noted that the apparatus shown in FIG. 14 is capable of implementing the method shown in FIG. 7, with the same technical effects achieved, so the description is relatively simple. For related content, refer to the foregoing description of the embodiment shown in FIG. 1.

Optionally, the first receiving module 1401 may be specifically configured to receive the first SL positioning assistance information reported by the first terminal in a case that a first default trigger condition is met.

Refer to the foregoing for content of the first default trigger condition and specific content of the SL positioning required information configured by the network-side device for the first terminal, which is not repeated herein.

It should be noted that the apparatus shown in FIG. 14 is capable of implementing the method shown in FIG. 7, with the same technical effects achieved, so the description is relatively simple. For related content, refer to the foregoing description of the embodiment shown in FIG. 7.

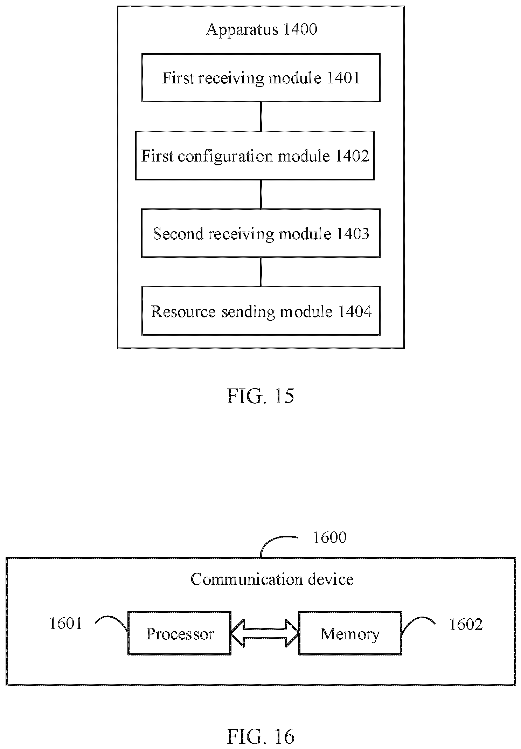

Optionally, as shown in FIG. 15, an embodiment of this application provides a communication apparatus 1400 based on SL positioning assistance information, which may further include a second receiving module 1403 configured to receive resource request information sent by a first terminal or a MAC layer of the first terminal.

The resource request information is used to request the network-side device for a resource for transmitting SL positioning related information, and the SL positioning related information includes at least one of an SL positioning reference signal and an SL positioning reference signal measurement result.

Optionally, the resource request information is sent by the first terminal or the MAC layer of the first terminal in a case that a second default trigger condition is met.

Refer to the foregoing for the content included in the second default trigger condition, which is not repeated herein.

Optionally, as shown in FIG. 15, an embodiment of this application provides a communication apparatus 1400 based on SL positioning assistance information, which may further include a resource sending module 1404 configured to send a first resource to the first terminal based on the resource request information.

The first resource includes at least one of a first SL resource and a second SL resource, where the first SL resource includes an SL resource for SL positioning related information transmission, and the second SL resource includes an SL resource for sidelink shared channel SL-SCH transmission. As mentioned above, the SL positioning related information may include at least one of an SL positioning reference signal and an SL positioning reference signal measurement result.

Optionally, the first receiving module 1401 may be specifically configured to receive the first SL positioning assistance information reported by the first terminal through third information; or, receive the first SL positioning assistance information reported by the first terminal through fourth information. The third information is SidelinkUEInformationNR or UEAssistanceInformationNR, and the fourth information is different from the third information.

It should be noted that the apparatus shown in FIG. 15 is capable of implementing the method shown in FIG. 8, with the same technical effects achieved, so the description is relatively simple. For related content, refer to the foregoing description of the embodiment shown in FIG. 8.

It should be noted that the communication apparatus based on SL positioning assistance information in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

Optionally, as shown in FIG. 16, an embodiment of this application further provides a communication device 1600, including a processor 1601 and a memory 1602. A program or instructions capable of running on the processor 1601 are stored in the memory 1602. For example, when the communication device 1600 is a terminal and when the program or the instructions are executed by the processor 1601, the steps of the foregoing embodiments of the communication method based on SL positioning assistance information are implemented, with the same technical effects achieved When the communication device 1600 is a network-side device and when the program or instructions are executed by the processor 1601, the steps of the foregoing embodiments of the communication method based on SL positioning assistance information are implemented, with the same technical effects achieved. To avoid repetition, details are not described herein again.

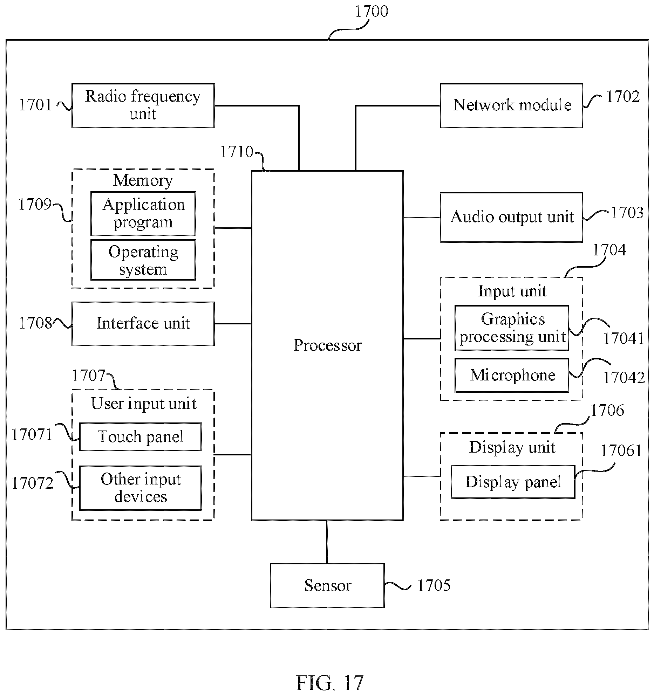

An embodiment of this application further provides a terminal, including a processor and a communication interface, where the communication interface is configured to determine first SL positioning assistance information, and the processor is configured to report the first SL positioning assistance information to a network-side device. The terminal embodiment corresponds to the foregoing terminal side method embodiment, and the implementation processes and implementations of the foregoing method embodiments can be applied to the terminal embodiments, with the same technical effects achieved. Specifically, FIG. 17 is a schematic diagram of a hardware structure of a terminal implementing an embodiment of this application.

The terminal 1700 includes but is not limited to at least part of components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art can understand that the terminal 1700 may further include a power supply (such as a battery) for supplying power to the components. The power supply may be logically connected to the processor 1710 through a power management system. In this way, functions such as charge management, discharge management, and power consumption management are implemented by using the power management system. The terminal structure shown in FIG. 17 does not constitute a limitation to the terminal. The terminal may include more or fewer components than those shown in the figure, or some components may be combined, or there may be a different component arrangement, which is not repeated herein.

It should be understood that in this embodiment of this application, the input unit 1704 may include a graphics processing unit (Graphics Processing Unit, GPU) 17041 and a microphone 17042. The GPU 17041 processes image data of a static picture or a video that is obtained by an image capture apparatus (for example, a camera) in a video capture mode or an image capture mode. The display unit 1706 may include the display panel 17061. The display panel 17061 may be configured in a form of a liquid crystal display, an organic light-emitting diode, or the like. The user input unit 1707 includes at least one of a touch panel 17071 and other input devices 17072. The touch panel 17071 is also referred to as a touchscreen. The touch panel 17071 may include two parts: a touch detection apparatus and a touch controller. The other input devices 17072 may include but are not limited to at least one of a physical keyboard, a functional button (such as a volume control button or a power on/off button), a trackball, a mouse, and a joystick. Details are not described herein.

In this embodiment of this application, after receiving downlink data from a network-side device, the radio frequency unit 1701 sends the downlink data to the processor 1710 for processing; and the radio frequency unit 1701 also sends uplink data to the network-side device. Generally, the radio frequency unit 1701 includes, but is not limited to, an antenna, an amplifier, a transceiver, a coupler, a low noise amplifier, a duplexer, and the like.

The memory 1709 may be configured to store software programs or instructions and various data. The memory 1709 may mainly include a first storage area for storing programs or instructions and a second storage area for storing data, where the first storage area may store an operating system, an application program or instructions required by at least one function (for example, an audio playing function and an image playing function), and the like. In addition, the memory 1709 may be a volatile memory or a non-volatile memory, or the memory 1709 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1709 described in this embodiment this application includes but is not limited to these and any other suitable types of memories.

The processor 1710 may include one or more processing units. Optionally, the processor 1710 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 1710.

The processor 1710 is configured to determine first SL positioning assistance information; and the radio frequency unit 1701 is configured to report the first SL positioning assistance information to a network-side device.

The first SL positioning assistance information is used for configuring SL positioning required information for the first terminal by the network-side device, and the SL positioning required information includes at least one of SL positioning assistance data and SL positioning configuration information.

In this embodiment of this application, because the terminal 1700 reports the first SL positioning assistance information to the network-side device, the network-side device can configure the SL positioning required information for the first terminal based on the first SL positioning assistance information, and the SL positioning required information includes at least one of SL positioning assistance data and SL positioning configuration information, so that the network-side device can implement a purpose of assisting SL positioning.

Optionally, the radio frequency unit 1701 is further configured to receive the SL positioning required information configured by the network-side device based on the first SL positioning assistance information.

Optionally, the radio frequency unit 1701 is further configured to send the SL positioning required information to the second terminal.

Optionally, the processor 1710 is further configured to update the first SL positioning assistance information in a case that the second terminal rejects configuration in the SL positioning required information; and the radio frequency unit 1701 is further configured to report the first SL positioning assistance information again.

Optionally, the radio frequency unit 1701 is further configured to send resource request information to the network-side device, where the resource request information is used to request the network-side device for a resource for transmitting SL positioning related information, and the SL positioning related information includes at least one of an SL positioning reference signal and an SL positioning reference signal measurement result.

Optionally, the radio frequency unit 1701 is further configured to receive a first resource scheduled by the network-side device based on the resource request information.

The first resource includes at least one of a first SL resource and a second SL resource, where the first SL resource includes an SL resource for SL positioning related information transmission, and the second SL resource includes an SL resource for sidelink shared channel SL-SCH transmission.

An embodiment of this application further provides a network-side device, including a processor and a communication interface, where the communication interface is configured to receive first SL positioning assistance information reported by a first terminal, and the processor is configured to configure SL positioning required information for the first terminal based on the first SL positioning assistance information, where the SL positioning required information includes at least one of SL positioning assistance data and SL positioning configuration information. The network-side device embodiment corresponds to the foregoing network-side device method embodiment, and the implementation processes and implementations of the foregoing method embodiments can be applied to the network-side device embodiments, with the same technical effects achieved.

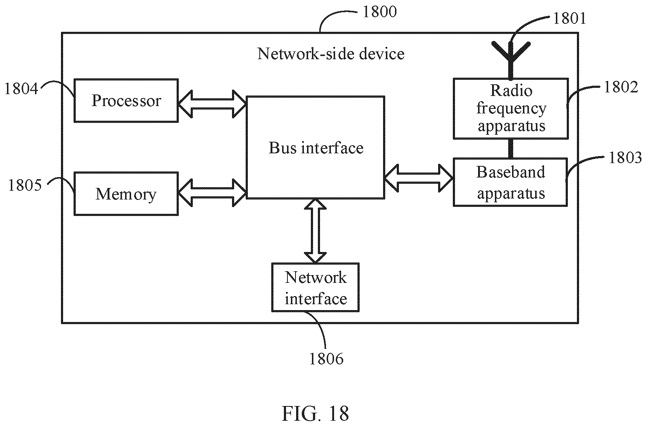

Specifically, an embodiment of this application further provides a network-side device. As shown in FIG. 18, the network-side device 1800 includes an antenna 1801, a radio frequency apparatus 1802, a baseband apparatus 1803, a processor 1804, and a memory 1805. The antenna 1801 is connected to the radio frequency apparatus 1802. In an uplink direction, the radio frequency apparatus 1802 receives information by using the antenna 1801, and transmits the received information to the baseband apparatus 1803 for processing. In a downlink direction, the baseband apparatus 1803 processes to-be-transmitted information, and transmits the information to the radio frequency apparatus 1802; and the radio frequency apparatus 1802 processes the received information and then transmits the information by using the antenna 1801.

The method performed by the network-side device in the foregoing embodiment may be implemented in the baseband apparatus 1803, and the baseband apparatus 1803 includes a baseband processor.

The baseband apparatus 1803 may include, for example, at least one baseband processing unit, where a plurality of chips are disposed on the baseband processing unit. As shown in FIG. 18, one of the chips is, for example, the baseband processor, and connected to the memory 1805 through a bus interface, to invoke the program in the memory 1805 to perform the operations of the network device shown in the foregoing method embodiment.

The network-side device may further include a network interface 1806, where the interface is, for example, a common public radio interface (common public radio interface, CPRI).

Specifically, the network-side device 1800 according to this embodiment of the present invention further includes instructions or programs stored in the memory 1805 and capable of running on the processor 1804, and the processor 1804 calls the instructions or programs in the memory 1805 to execute the methods performed by the modules shown in FIG. 17, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the communication method based on SL positioning assistance information are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the communication method based on SL positioning assistance information, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-volatile storage medium, and when being executed by at least one processor, the computer program/program product is configured to implement the processes of the foregoing embodiments of the communication method based on SL positioning assistance information, with the same technical effects achieved. To avoid repetition, details are not repeated herein.

An embodiment of this application further provides a communication system, including a terminal and a network-side device, where the terminal can be configured to execute the steps of the communication method based on SL positioning assistance information shown in FIG. 3A, and the network-side device can be configured to execute the steps of the communication method based on SL positioning assistance information shown in FIG. 7.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for indicating a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A communication method based on SL positioning assistance information, wherein the method comprises:
determining, by a first terminal, first SL positioning assistance information; and
reporting, by the first terminal, the first SL positioning assistance information to a network-side device; wherein
the first SL positioning assistance information is used for configuring SL positioning required information for the first terminal by the network-side device, and the SL positioning required information comprises at least one of SL positioning assistance data and SL positioning configuration information.

2. The method according to claim 1, wherein the first SL positioning assistance information comprises SL positioning assistance information of one or more related terminals; wherein
the related terminal comprises at least one of the first terminal and a second terminal, and the second terminal comprises at least one of a terminal establishing an SL connection to the first terminal and a terminal performing SL positioning related information transmission with the first terminal, wherein the SL positioning related information comprises at least one of an SL positioning reference signal and an SL positioning reference signal measurement result.

3. The method according to claim 2, wherein the first SL positioning assistance information comprises at least one of the following:
first bandwidth information, used to indicate a desired bandwidth for SL positioning reference signal transmission for the related terminal;
first frequency information, used to indicate frequency information that is preferred for SL positioning reference signal transmission for the related terminal;
periodicity information, used to indicate information about a periodicity that is preferred for SL positioning reference signal transmission for the related terminal;
at least one of positioning service indication information and positioning request indication information of the related terminal;
an ID of the second terminal;
first time interval information corresponding to the related terminal, wherein the first time interval information comprises at least one of first transmission time interval information and second transmission time interval information, wherein the first transmission time interval information is transmission time interval information of a first SL positioning reference signal and a second SL positioning reference signal, the second transmission time interval information is maximum transmission interval information of measurement result reporting information of the first SL positioning reference signal and first information, the first SL positioning reference signal is an SL positioning reference signal sent by the related terminal, the second SL positioning reference signal is an SL positioning reference signal received by the related terminal, and the first information comprises at least one of SL positioning request information and SL positioning measurement information;
transmission time information that is preferred for SL positioning reference signal transmission for the related terminal, wherein the transmission time information comprises at least one of a transmission start time and a transmission end time;
SL positioning reference signal resource selection window information that is preferred for the related terminal;
an SL positioning reference signal configuration that is preferred for the related terminal;
an SL positioning reference signal configuration that is not preferred for the related terminal;
an SL positioning reference signal transmission resource set that is preferred for the related terminal;
an SL positioning reference signal transmission resource set that is not preferred for the related terminal;
a requested or released resource for SL positioning for the related terminal;
configuration information of an SL positioning dedicated resource pool that is preferred for the related terminal.

4. The method according to claim 3, wherein the first SL positioning assistance information further comprises at least one of first frequency indication information and first BWP indication information; wherein
the first frequency indication information is used for indicating at least one of a first frequency and a first frequency list, wherein the first frequency is a frequency that is preferred for SL positioning reference signal transmission for the related terminal, the first frequency list is a frequency list that is preferred for SL positioning reference signal transmission for the related terminal, and in a case that the first frequency is different from a second frequency, the first SL positioning assistance information comprises the first frequency indication information, and the second frequency is a frequency used for sidelink shared channel SL-SCH transmission; wherein
the first BWP indication information is used to indicate a first BWP, wherein the first BWP is a BWP that is preferred for SL positioning reference signal transmission for the related terminal, and in a case that the first BWP is different from a second BWP, the first SL positioning assistance information comprises the first BWP indication information, and the second BWP is a BWP used by the related terminal for sidelink shared channel SL-SCH transmission.

5. The method according to claim 4, wherein the first SL positioning assistance information comprises the first frequency indication information;
the first frequency indication information comprises at least one of the following information:
a position of the first frequency in the first frequency list;
absolute frequency information corresponding to the first frequency and relative frequency information corresponding to the first frequency;
the first frequency indication information is used to indicate or assist the network-side device to configure a dedicated first frequency; and
frequency domain information of the first frequency relative to the second frequency.

6. The method according to claim 4, wherein the first SL positioning assistance information comprises the first BWP indication information; and
the first BWP indication information comprises at least one of the following information:
a frequency domain position of the first BWP;
a bandwidth of the first BWP;
a subcarrier spacing SCS corresponding to the first BWP;
a symbol position corresponding to the first BWP and for transmitting SL positioning related information;
a time domain position corresponding to the first BWP and for transmitting SL positioning related information; and
the first BWP indication information is used to indicate or assist the network-side device to configure a dedicated first BWP.

7. The method according to any one of claims 3 to 6, wherein the first SL positioning assistance information further comprises at least one of the following:
sidelink discontinuous reception SL DRX configuration information of the related terminal; and
whether the related terminal supports transmission of an SL positioning reference signal during an inactive time.

8. The method according to claim 7, wherein the SL DRX configuration information comprises at least one of the following:
an SL DRX cycle;
a time length of an SL DRX onduration; and
a starting position of the SL DRX onduration.

9. The method according to any one of claims 3 to 8, wherein the first SL positioning assistance information further comprises at least one of the following:
configuration information of a measurement gap of the related terminal; and
whether the related terminal supports transmission of an SL positioning reference signal within an active time of the measurement gap; wherein
the configuration information of the measurement gap comprises at least one of the following:
a period of the measurement gap;
a length of a duration of the measurement gap; and
a starting position of the duration of the measurement gap.

10. The method according to any one of claims 3 to 9, wherein the first SL positioning assistance information further comprises at least one of the following:
synchronization deviation information between the second terminal and the first terminal;
synchronization source indication information of the second terminal; and
serving cell identification information of the second terminal.

11. The method according to any one of claims 3 to 10, wherein the first SL positioning assistance information further comprises preset capability information of the second terminal; and
the preset capability information of the second terminal comprises at least one of the following:
whether the second terminal supports configuring the first frequency to transmit an SL positioning reference signal;
whether the second terminal supports configuring the first BWP to transmit an SL positioning reference signal;
the number of SL positioning reference signals that the second terminal is able to measure in a single slot;
the number of SL positioning reference signals that the second terminal is able to send in a single slot;
whether the second terminal supports simultaneous sending and reception of SL positioning reference signals in a single slot;
second time interval information corresponding to the second terminal, wherein the second time interval information is time interval information between sending of an SL positioning reference signal and reception of an SL positioning reference signal;
third time interval information corresponding to the second terminal, wherein the third time interval information is time interval information between SL positioning reference signal transmission and sidelink shared channel SL-SCH transmission;
information about whether the second terminal supports simultaneous transmission of an SL positioning reference signal and an SL-SCH; and
whether the second terminal supports simultaneous measurement of an SL positioning reference signal and a Uu signal.

12. The method according to claim 11, wherein the preset capability information of the second terminal comprises the information about whether the second terminal supports simultaneous transmission of an SL positioning reference signal and an SL-SCH;
the information about whether the second terminal supports simultaneous transmission of an SL positioning reference signal and an SL-SCH comprises at least one of the following:
whether the second terminal supports simultaneous transmission of an SL positioning reference signal and an SL-SCH on the first frequency or a single frequency;
whether the second terminal supports simultaneous transmission of an SL positioning reference signal and an SL-SCH on the first BWP or a single BWP;
a frequency of the first BWP supported by the second terminal is the same as or different from a frequency of the second BWP, and the second BWP is a BWP used for sidelink shared channel SL-SCH transmission by the related terminal;
power control capability information of the second terminal;
information about a maximum number of SL positioning reference signal resources supported by the second terminal on one BWP; and
information about a maximum number of SL positioning reference signal resources supported by the second terminal on one BWP and one slot.

13. The method according to any one of claims 3 to 12, wherein the first SL positioning assistance information further comprises positioning mode information used by the related terminal; and
the positioning mode information used by the related terminal is used to indicate at least one of the following information:
only SL positioning;
hybrid positioning;
sensor information;
relative positioning indication information;
absolute positioning indication information;
information about a reference point, wherein the reference point comprises at least one of a reference terminal and a reference transmission and reception point TRP; and
a zone ID.

14. The method according to any one of claims 3 to 13, wherein the first SL positioning assistance information further comprises assistance information related to a road side unit RSU, wherein the RSU is an RSU for establishing SL communication with the related terminal, and/or the RSU is an RSU selected by the related terminal for assisting SL positioning;
the assistance information related to the RSU comprises at least one of the following:
whether the related terminal supports RSU-assisted positioning;
identification information of the RSU;
measurement information of the RSU, wherein the measurement information comprises at least one of energy information, time information, and angle information; and
position information of the RSU.

15. The method according to any one of claims 3 to 14, wherein the first SL positioning assistance information further comprises configuration failure indication information of second information or configuration refusal indication information for refusing configuration of the second information; and
the second information comprises at least one of the following:
measurement gap or measurement window for measurement on an SL positioning reference signal;
indicating information of a first SL resource, wherein the first SL resource comprises an SL resource for SL positioning related information transmission;
sidelink discontinuous reception SL DRX configuration information;
configuration information of the first frequency, wherein the first frequency is a frequency used for SL positioning reference signal transmission;
configuration information of a first BWP, wherein the first BWP is a BWP for SL positioning reference signal transmission; and
configuration information of a first bandwidth, wherein the first bandwidth is a bandwidth used for SL positioning reference signal transmission.

16. The method according to any one of claims 3 to 15, wherein the first SL positioning assistance information further comprises timing error group TEG related information; and
the TEG related information comprises at least one of the following:
an association list of TEGs and SL positioning reference signals comprises the following fields: TEG ID, time stamp, and SL positioning reference signal;
TEG type, wherein the TEG type comprises at least one of the following: TX TEG, RX TEG, and RXTXTEG;
an ID of the related terminal; and
identification information of the SL positioning reference signal.

17. The method according to any one of claims 2 to 16, wherein the reporting, by the first terminal, the first SL positioning assistance information to a network-side device comprises:
in a case that a first default trigger condition is met, reporting, by the first terminal, the first SL positioning assistance information to the network-side device; wherein
the first default trigger condition comprises at least one of the following:
the first terminal did not report first SL positioning assistance information when entering a connected state with the network-side device last time;
first SL positioning assistance information reported by the first terminal last time is not provided in positioning broadcast information;
the first terminal needs to report the first SL positioning assistance information to obtain the SL positioning required information;
the first SL positioning assistance information reported by the first terminal last time is not provided in the SL positioning required information;
the first SL positioning assistance information reported by the first terminal last time did not include related information of the second terminal, and the related information of the second terminal comprises at least one of join information that the second terminal joins SL communication with the first terminal and release information that the second terminal releases SL communication with the first terminal;
the first SL positioning assistance information reported by the first terminal last time did not include any one of the first SL positioning assistance information according to any one of claims 3 to 16;
any one of the first SL positioning assistance information of the first terminal has changed;
a radio link failure RLF of the first terminal; and
sidelink radio resource control SL RRC reconfiguration failure of the first terminal.

18. The method according to claim 2, wherein the method further comprises:
receiving, by the first terminal, the SL positioning required information configured by the network-side device based on the first SL positioning assistance information.

19. The method according to claim 18, wherein the network-side device comprises a base station, and the SL positioning required information comprises SL positioning configuration information, and the SL positioning configuration information configured by the base station for the first terminal comprises at least one of the following:
frequency information for SL positioning, wherein the frequency information comprises at least one of information about a first frequency, information about a first BWP, absolute frequency information, and relative frequency information, the information about the first frequency is a frequency for SL positioning reference signal transmission, the first BWP is a BWP for SL positioning reference signal transmission, and the information about the first BWP comprises frequency information of the first BWP, bandwidth information of the first BWP, and time domain position information for SL positioning reference signal transmission;
configuration information for an SL positioning resource pool;
configuration information of at least one road side unit RSU, wherein the configuration information of the RSU comprises at least one of position information of the RSU and information related to a signal transmitted by the RSU, and the information related to the signal transmitted by the RSU comprises at least one of a sequence of the signal and time-frequency information of the signal;
information about at least one SL positioning reference signal, wherein the information about the SL positioning reference signal comprises a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal;
resource selection window information of at least one SL positioning reference signal, wherein the resource selection window information is used for selecting an SL resource by the first terminal, or the resource selection window information is used for indicating a resource selection window of the related terminal;
measurement gap or measurement window for measurement on the SL positioning reference signal; and
sidelink discontinuous reception SL DRX configuration information.

20. The method according to claim 19, wherein the SL positioning configuration information configured by the base station for the first terminal further comprises at least one of the following:
first enabling information, wherein the first enabling information is used to indicate enabling information of the SL positioning reference signal;
measurement configuration information of the SL positioning reference signal, wherein the measurement configuration information is used to configure at least one of the following: at least one set of measurement configuration and at least one set of reporting configuration; and
priority information of the SL positioning reference signal.

21. The method according to claim 19, wherein the network-side device further comprises an LMF, and before the base station configures the SL positioning configuration information for the first terminal, the LMF configures at least one of the following SL positioning configuration information for the base station:
information about the first BWP;
configuration information for an SL positioning resource pool;
resource selection window information of the at least one SL positioning reference signal;
a measurement gap or measurement window for measurement on the SL positioning reference signal; and
SL DRX configuration information.

22. The method according to claim 18, wherein the network-side device comprises an LMF, and the SL positioning required information comprises SL positioning assistance data, and the SL positioning assistance data configured for the first terminal by the LMF comprises at least one of the following:
frequency information for SL positioning, wherein the frequency information comprises at least one of information about a first frequency, information about a first BWP, absolute frequency information, and relative frequency information, the information about the first frequency is a frequency used for SL positioning reference signal transmission;
configuration information of at least one road side unit RSU, wherein the configuration information of the RSU comprises at least one of position information of the RSU and information related to a signal transmitted by the RSU, and the information related to the signal transmitted by the RSU comprises at least one of a sequence of the signal and time-frequency information of the signal; and
information about at least one SL positioning reference signal, wherein the information about the SL positioning reference signal comprises a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal.

23. The method according to claim 18, wherein the SL positioning required information comprises configuration information of a measurement gap of the related terminal.

24. The method according to claim 23, wherein the measurement gap of the related terminal is determined based on SL DRX configuration information of the related terminal, and the measurement gap of the related terminal is located in an SL DRX inactive time of the related terminal.

25. The method according to any one of claims 18 to 24, wherein the SL positioning required information configured by the network-side device matches the first SL positioning assistance information reported by the first terminal.

26. The method according to any one of claims 18 to 25, wherein the method further comprises:
sending, by the first terminal, the SL positioning required information to the second terminal.

27. The method according to claim 26, wherein the method further comprises:
in a case that the second terminal rejects configuration in the SL positioning required information, updating, by the first terminal, the first SL positioning assistance information and reporting it to the network-side device.

28. The method according to any one of claims 18 to 27, wherein the method further comprises:
sending, by the first terminal or a MAC layer of the first terminal, resource request information to the network-side device;
or,
triggering, by the first terminal or a MAC layer of the first terminal, to send resource request information to the network-side device; wherein
the resource request information is used to request the network-side device for a resource for SL positioning related information transmission, and the SL positioning related information comprises at least one of an SL positioning reference signal and an SL positioning reference signal measurement result.

29. The method according to claim 28, wherein the resource request information is used to request the network-side device for a resource for SL positioning reference signal transmission.

30. The method according to claim 29, wherein the resource request information comprises at least one of:
bandwidth information for SL positioning reference signal transmission;
frequency information used for SL positioning reference signal transmission;
information about the number of subchannels used for SL positioning reference signal transmission; and
period information used for SL positioning reference signal transmission.

31. The method according to claim 28, wherein the network-side device configures for the first terminal a plurality of selectable bandwidths and a plurality of selectable subchannels, the resource request information is sent through a MAC CE, and the MAC CE is used to indicate at least one of the following:
a bandwidth used for SL positioning reference signal transmission in the multiple candidate bandwidths; and
a subchannel used for SL positioning reference signal transmission in the multiple candidate subchannels.

32. The method according to any one of claims 28 to 31, wherein
the first terminal or the MAC layer of the first terminal sends the resource request information to the network-side device in a case that a second default trigger condition is met; wherein
the second default trigger condition comprises at least one of the following:
at least one of an pending SL positioning reference signal and an pending SL-SCH to be transmitted in the first terminal;
the first terminal has received at least one of SL positioning request information and an SL positioning reference signal; and
a timer for SL positioning reference signal transmission periodicity by the first terminal expires.

33. The method according to any one of claims 28 to 32, wherein the method further comprises:
receiving, by the first terminal, a first resource scheduled by the network-side device based on the resource request information; wherein
the first resource comprises at least one of a first SL resource and a second SL resource, wherein the first SL resource comprises an SL resource for the SL positioning related information transmission, and the second SL resource comprises an SL resource for sidelink shared channel SL-SCH transmission.

34. The method according to claim 33, wherein the method further comprises at least one of the following steps:
sending, by the first terminal, scheduling information of the first resource to the second terminal;
transmitting, by the first terminal, an SL positioning reference signal to the second terminal on the first SL resource; and
transmitting, by the first terminal, an SL positioning reference signal measurement result to the second terminal on the first SL resource.

35. The method according to any one of claims 2 to 34, wherein the SL positioning reference signal comprises at least one of the following:
sidelink positioning reference signal SL-PRS;
sidelink synchronization signal and PBCH block SL-SSB;
sidelink channel state information reference signal SL CSI-RS;
sidelink phase-tracking reference signal SL PTRS; and
sidelink demodulation reference signal SL DMRS.

36. The method according to claim 2, wherein before the reporting, by the first terminal, the first SL positioning assistance information to a network-side device, the method further comprises:
receiving, by the first terminal, second SL positioning assistance information sent by the second terminal, wherein the second SL positioning assistance information is used for determining the first SL positioning assistance information by the first terminal.

37. The method according to any one of claims 1 to 36, wherein the reporting, by the first terminal, the first SL positioning assistance information to the network-side device comprises:
reporting, by the first terminal, the first SL positioning assistance information to the network-side device through third information;
or,
reporting, by the first terminal, the first SL positioning assistance information to the network-side device through fourth information; wherein
the third information is SidelinkUEInformationNR or UEAssistanceInformationNR, and the fourth information is different from the third information.

38. A communication apparatus based on SL positioning assistance information, wherein the apparatus comprises:
a first determining module, configured to determine first SL positioning assistance information; and
a first reporting module, configured to report the first SL positioning assistance information to a network-side device; wherein
the first SL positioning assistance information is used for configuring SL positioning required information for a first terminal by the network-side device, and the SL positioning required information comprises at least one of SL positioning assistance data and SL positioning configuration information.

39. A communication method based on SL positioning assistance information, wherein the method comprises:
receiving, by a network-side device, first SL positioning assistance information reported by a first terminal; and
configuring, by the network-side device, SL positioning required information based on the first SL positioning assistance information for the first terminal, wherein the SL positioning required information comprises at least one of SL positioning assistance data and SL positioning configuration information.

40. The method according to claim 39, wherein the first SL positioning assistance information comprises SL positioning assistance information of one or more related terminals; wherein
the related terminal comprises at least one of the first terminal and a second terminal, and the second terminal comprises at least one of a terminal establishing an SL connection to the first terminal and a terminal performing SL positioning related information transmission with the first terminal, wherein the SL positioning related information comprises at least one of an SL positioning reference signal and an SL positioning reference signal measurement result.

41. The method according to claim 40, wherein the first SL positioning assistance information comprises at least one of the following:
first bandwidth information, used to indicate a desired bandwidth for SL positioning reference signal transmission for the related terminal;
first frequency information, used to indicate frequency information that is preferred for SL positioning reference signal transmission for the related terminal;
periodicity information, used to indicate information about a periodicity that is preferred for SL positioning reference signal transmission for the related terminal;
at least one of positioning service indication information and positioning request indication information of the related terminal;
an ID of the second terminal;
first time interval information corresponding to the related terminal, wherein the first time interval information comprises at least one of first transmission time interval information and second transmission time interval information, wherein the first transmission time interval information is transmission time interval information of a first SL positioning reference signal and a second SL positioning reference signal, the second transmission time interval information is maximum transmission interval information of measurement result reporting information of the first SL positioning reference signal and first information, the first SL positioning reference signal is an SL positioning reference signal sent by the related terminal, the second SL positioning reference signal is an SL positioning reference signal received by the related terminal, and the first information comprises at least one of SL positioning request information and SL positioning measurement information;
transmission time information that is preferred for SL positioning reference signal transmission for the related terminal, wherein the transmission time information comprises at least one of a transmission start time and a transmission end time;
SL positioning reference signal resource selection window information that is preferred for the related terminal;
an SL positioning reference signal configuration that is preferred for the related terminal;
an SL positioning reference signal configuration that is not preferred for the related terminal;
an SL positioning reference signal transmission resource set that is preferred for the related terminal;
an SL positioning reference signal transmission resource set that is not preferred for the related terminal;
a requested or released resource for SL positioning for the related terminal; and
configuration information of an SL positioning dedicated resource pool that is preferred for the related terminal.

42. The method according to claim 41, wherein the first SL positioning assistance information further comprises at least one of first frequency indication information and first BWP indication information; wherein
the first frequency indication information is used for indicating at least one of a first frequency and a first frequency list, wherein the first frequency is a frequency that is preferred for SL positioning reference signal transmission for the related terminal, the first frequency list is a frequency list that is preferred for SL positioning reference signal transmission for the related terminal, and in a case that the first frequency is different from a second frequency, the first SL positioning assistance information comprises the first frequency indication information, and the second frequency is a frequency used for sidelink shared channel SL-SCH transmission; wherein
the first BWP indication information is used to indicate a first BWP, wherein the first BWP is a BWP that is preferred for SL positioning reference signal transmission for the related terminal, and in a case that the first BWP is different from a second BWP, the first SL positioning assistance information comprises the first BWP indication information, and the second BWP is a BWP used by the related terminal for sidelink shared channel SL-SCH transmission.

43. The method according to claim 42, wherein the first SL positioning assistance information comprises the first frequency indication information;
the first frequency indication information comprises at least one of the following information:
a position of the first frequency in the first frequency list;
absolute frequency information corresponding to the first frequency and relative frequency information corresponding to the first frequency;
the first frequency indication information is used to indicate or assist the network-side device to configure a dedicated first frequency; and
frequency domain information of the first frequency relative to the second frequency.

44. The method according to claim 42, wherein the first SL positioning assistance information comprises the first BWP indication information; and
the first BWP indication information comprises at least one of the following information:
a frequency domain position of the first BWP;
a bandwidth of the first BWP;
a subcarrier spacing SCS corresponding to the first BWP;
a symbol position corresponding to the first BWP and for transmitting SL positioning related information;
a time domain position corresponding to the first BWP and for transmitting SL positioning related information; and
the first BWP indication information is used to indicate or assist the network-side device to configure a dedicated first BWP.

45. The method according to any one of claims 41 to 44, wherein the first SL positioning assistance information further comprises at least one of the following:
sidelink discontinuous reception SL DRX configuration information of the related terminal; and
whether the related terminal supports transmission of an SL positioning reference signal during an inactive time.

46. The method according to claim 45, wherein the SL DRX configuration information comprises at least one of the following:
an SL DRX cycle;
a time length of an SL DRX onduration; and
a starting position of the SL DRX onduration.

47. The method according to any one of claims 41 to 46, wherein
configuration information of a measurement gap of the related terminal; and
whether the related terminal supports transmission of an SL positioning reference signal within an active time of the measurement gap; wherein
the configuration information of the measurement gap comprises at least one of the following:
a period of the measurement gap;
a length of a duration of the measurement gap; and
a starting position of the duration of the measurement gap.

48. The method according to any one of claims 41 to 47, wherein the first SL positioning assistance information further comprises at least one of the following:
synchronization deviation information between the second terminal and the first terminal;
synchronization source indication information of the second terminal; and
serving cell identification information of the second terminal.

49. The method according to any one of claims 41 to 48, wherein the first SL positioning assistance information further comprises preset capability information of the second terminal; and
the preset capability information of the second terminal comprises at least one of the following:
whether the second terminal supports configuring the first frequency to transmit an SL positioning reference signal;
whether the second terminal supports configuring the first BWP to transmit an SL positioning reference signal;
the number of SL positioning reference signals that the second terminal is able to measure in a single slot;
the number of SL positioning reference signals that the second terminal is able to send in a single slot;
whether the second terminal supports simultaneous sending and reception of SL positioning reference signals in a single slot;
second time interval information corresponding to the second terminal, wherein the second time interval information is time interval information between sending of an SL positioning reference signal and reception of an SL positioning reference signal;
third time interval information corresponding to the second terminal, wherein the third time interval information is time interval information between SL positioning reference signal transmission and sidelink shared channel SL-SCH transmission;
information about whether the second terminal supports simultaneous transmission of an SL positioning reference signal and an SL-SCH; and
whether the second terminal supports simultaneous measurement of an SL positioning reference signal and a Uu signal.

50. The method according to claim 49, wherein the preset capability information of the first terminal comprises information about whether the second terminal supports simultaneous transmission of an SL positioning reference signal and an SL-SCH;
the information about whether the second terminal supports simultaneous transmission of an SL positioning reference signal and an SL-SCH comprises at least one of the following:
whether the second terminal supports simultaneous transmission of an SL positioning reference signal and an SL-SCH on the first frequency or a single frequency;
whether the second terminal supports simultaneous transmission of an SL positioning reference signal and an SL-SCH on the first BWP or a single BWP;
a frequency of the first BWP supported by the second terminal is the same as or different from a frequency of the second BWP, and the second BWP is a BWP used for sidelink shared channel SL-SCH transmission by the related terminal;
power control capability information of the second terminal;
information about a maximum number of SL positioning reference signal resources supported by the second terminal on one BWP; and
information about a maximum number of SL positioning reference signal resources supported by the second terminal on one BWP and one slot.

51. The method according to any one of claims 41 to 50, wherein the first SL positioning assistance information further comprises positioning mode information used by the related terminal; and
the positioning mode information used by the related terminal is used to indicate at least one of the following information:
only SL positioning;
hybrid positioning;
sensor information;
relative positioning indication information;
absolute positioning indication information;
information about a reference point, wherein the reference point comprises at least one of a reference terminal and a reference transmission and reception point TRP; and
a zone ID.

52. The method according to any one of claims 41 to 51, wherein the first SL positioning assistance information further comprises assistance information related to a road side unit RSU, wherein the RSU is for establishing SL communication with the related terminal, and/or the RSU is an RSU selected by the related terminal for assisting SL positioning;
the assistance information related to the RSU comprises at least one of the following:
whether the related terminal supports RSU-assisted positioning;
identification information of the RSU;
measurement information of the RSU, wherein the measurement information comprises at least one of energy information, time information, and angle information; and
position information of the RSU.

53. The method according to any one of claims 41 to 52, wherein the first SL positioning assistance information further comprises configuration failure indication information of second information or configuration refusal indication information for refusing configuration of the second information; and
the second information comprises at least one of the following:
measurement gap or measurement window for measurement on an SL positioning reference signal;
indicating information of a first SL resource, wherein the first SL resource comprises an SL resource for SL positioning related information transmission;
sidelink discontinuous reception SL DRX configuration information;
configuration information of the first frequency, wherein the first frequency is a frequency used for SL positioning reference signal transmission;
configuration information of a first BWP, wherein the first BWP is a BWP for SL positioning reference signal transmission; and
configuration information of a first bandwidth, wherein the first bandwidth is a bandwidth used for SL positioning reference signal transmission.

54. The method according to any one of claims 41 to 53, wherein the first SL positioning assistance information further comprises timing error group TEG related information; and
the TEG related information comprises at least one of the following:
an association list of TEGs and SL positioning reference signals comprises the following fields: TEG ID, time stamp, and SL positioning reference signal;
TEG type, wherein the TEG type comprises at least one of the following: TX TEG, RX TEG, and RXTXTEG;
an ID of the related terminal; and
identification information of the SL positioning reference signal.

55. The method according to any one of claims 40 to 54, wherein the receiving, by a network-side device, first SL positioning assistance information reported by a first terminal comprises:
receiving, by the network-side device, the first SL positioning assistance information reported by the first terminal in a case that a first default trigger condition is met; wherein
the first default trigger condition comprises at least one of the following:
the first terminal did not report first SL positioning assistance information when entering a connected state with the network-side device last time;
first SL positioning assistance information reported by the first terminal last time is not provided in positioning broadcast information;
the first terminal needs to report the first SL positioning assistance information to obtain the SL positioning required information;
the first SL positioning assistance information reported by the first terminal last time is not provided in the SL positioning required information;
the first SL positioning assistance information reported by the first terminal last time did not include related information of the second terminal, and the related information of the second terminal comprises at least one of join information that the second terminal joins SL communication with the first terminal and release information that the second terminal releases SL communication with the first terminal;
the first SL positioning assistance information reported by the first terminal last time did not include any one of the first SL positioning assistance information according to any one of claims 42 to 55;
any one of the first SL positioning assistance information of the first terminal has changed;
a radio link failure RLF of the first terminal; and
sidelink radio resource control SL RRC reconfiguration failure of the first terminal.

56. The method according to claim 40 to 55, wherein the network-side device comprises a base station, and the SL positioning required information comprises SL positioning configuration information, and the SL positioning configuration information configured by the base station for the first terminal comprises at least one of the following:
frequency information for SL positioning, wherein the frequency information comprises at least one of information about a first frequency, information about a first BWP, absolute frequency information, and relative frequency information, the information about the first frequency is a frequency for SL positioning reference signal transmission, the first BWP is a BWP for SL positioning reference signal transmission, and the information about the first BWP comprises frequency information of the first BWP, bandwidth information of the first BWP, and time domain position information for SL positioning reference signal transmission;
configuration information for an SL positioning resource pool;
configuration information of at least one road side unit RSU, wherein the configuration information of the RSU comprises at least one of position information of the RSU and information related to a signal transmitted by the RSU, and the information related to the signal transmitted by the RSU comprises at least one of a sequence of the signal and time-frequency information of the signal;
information about at least one SL positioning reference signal, wherein the information about the SL positioning reference signal comprises a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal;
resource selection window information of at least one SL positioning reference signal, wherein the resource selection window information is used for selecting an SL resource by the first terminal, or the resource selection window information is used for indicating a resource selection window of the related terminal;
measurement gap or measurement window for measurement on an SL positioning reference signal;
sidelink discontinuous reception SL DRX configuration information.

57. The method according to claim 56, wherein the SL positioning required information configured by the base station for the first terminal further comprises at least one of the following:
first enabling information, wherein the first enabling information is used to indicate enabling information of the SL positioning reference signal;
measurement configuration information of the SL positioning reference signal, wherein the measurement configuration information is used to configure at least one of the following: at least one set of measurement configuration and at least one set of reporting configuration; and
priority information of the SL positioning reference signal.

58. The method according to claim 57, wherein before the base station configures the SL positioning required information for the first terminal, the LMF configures at least one of the following SL positioning configuration information for the base station:
information about the first BWP;
configuration information for an SL positioning resource pool;
resource selection window information of the at least one SL positioning reference signal;
a measurement gap or measurement window for measurement on the SL positioning reference signal; and
SL DRX configuration information.

59. The method according to any one of claims 40 to 55, wherein the network-side device comprises an LMF, and the SL positioning required information comprises the SL positioning assistance data, and the SL positioning assistance data configured for the first terminal by the LMF comprises at least one of the following:
frequency information for SL positioning, wherein the frequency information comprises at least one of information about a first frequency, information about a first BWP, absolute frequency information, and relative frequency information, the information about the first frequency is a frequency used for SL positioning reference signal transmission;
configuration information of at least one road side unit RSU, wherein the configuration information of the RSU comprises at least one of position information of the RSU and information related to a signal transmitted by the RSU, and the information related to the signal transmitted by the RSU comprises at least one of a sequence of the signal and time-frequency information of the signal; and
information about at least one SL positioning reference signal, wherein the information about the SL positioning reference signal comprises a sequence ID of the SL positioning reference signal, a periodicity of the SL positioning reference signal, the number of symbols occupied by the SL positioning reference signal, a transmit power of the SL positioning reference signal, a sending slot of the SL positioning reference signal, a comb size value of the SL positioning reference signal and the number of slots occupied by the SL positioning reference signal.

60. The method according to any one of claims 40 to 55, wherein the SL positioning required information comprises configuration information of a measurement gap of the related terminal.

61. The method according to claim 60, wherein the measurement gap of the related terminal is determined based on SL DRX configuration information of the related terminal, and the measurement gap of the related terminal is located in an SL DRX inactive time of the related terminal.

62. The method according to any one of claims 56 to 61, wherein the SL positioning required information configured by the network-side device matches the first SL positioning assistance information reported by the first terminal.

63. The method according to any one of claims 40 to 62, wherein the method further comprises:
receiving, by the network-side device, updated first SL positioning assistance information reported by the first terminal, wherein the first SL positioning assistance information is updated by the first terminal in a case that the second terminal rejects configuration in the SL positioning required information.

64. The method according to any one of claims 40 to 63, wherein the method further comprises:
receiving, by the network-side device, resource request information sent by the first terminal or a MAC layer of the first terminal, wherein the resource request information is used to request the network-side device for a resource for transmitting SL positioning related information, and the SL positioning related information comprises at least one of an SL positioning reference signal and an SL positioning reference signal measurement result.

65. The method according to claim 64, wherein the resource request information is used to request the network-side device for a resource for SL positioning reference signal transmission.

66. The method according to claim 65, wherein the resource request information comprises at least one of:
bandwidth information for SL positioning reference signal transmission;
frequency information used for SL positioning reference signal transmission;
information about the number of subchannels used for SL positioning reference signal transmission; and
period information used for SL positioning reference signal transmission.

67. The method according to claim 64, wherein the network-side device configures for the first terminal a plurality of selectable bandwidths and a plurality of selectable subchannels, the resource request information is sent through a MAC CE, and the MAC CE is used to indicate at least one of the following:
a bandwidth used for SL positioning reference signal transmission in the plurality of selectable bandwidths; and
a subchannel used for SL positioning reference signal transmission in the plurality of selectable subchannels.

68. The method according to any one of claims 64 to 67, wherein
the resource request information is sent by the first terminal or the MAC layer of the first terminal in a case that a second default trigger condition is met;
the second default trigger condition comprises at least one of the following:
at least one of a pending SL positioning reference signal and a pending SL-SCH to be transmitted is present in the first terminal;
the first terminal has received at least one of SL positioning request information and an SL positioning reference signal; and
a period timer for SL positioning reference signal transmission by the first terminal expires.

69. The method according to any one of claims 64 to 68, wherein the method further comprises:
sending, by the network-side device, a first resource to the first terminal based on the resource request information; wherein
the first resource comprises at least one of a first SL resource and a second SL resource, wherein the first SL resource comprises an SL resource for SL positioning related information transmission, and the second SL resource comprises an SL resource for sidelink shared channel SL-SCH transmission.

70. The method according to any one of claims 40 to 69, wherein the SL positioning reference signal comprises at least one of the following:
sidelink positioning reference signal SL-PRS;
sidelink synchronization signal and PBCH block SL-SSB;
sidelink channel state information reference signal SL CSI-RS;
sidelink phase-tracking reference signal SL PTRS; and
sidelink demodulation reference signal SL DMRS.

71. The method according to any one of claims 39 to 70, wherein the receiving, by a network-side device, first SL positioning assistance information reported by a first terminal comprises:
receiving, by the network-side device, the first SL positioning assistance information reported by the first terminal through third information;
or,
receiving, by the network-side device, the first SL positioning assistance information reported by the first terminal through fourth information; wherein
the third information is SidelinkUEInformationNR or UEAssistanceInformationNR, and the fourth information is different from the third information.

72. A communication apparatus based on SL positioning assistance information, wherein the apparatus comprises:
a first receiving module, configured for a network-side device to receive first SL positioning assistance information reported by a first terminal; and
a first configuration module, configured for the network-side device to configure SL positioning required information based on the first SL positioning assistance information for the first terminal, wherein the SL positioning required information comprises at least one of SL positioning assistance data and SL positioning configuration information.

73. A terminal, comprising a processor and a memory, wherein the memory stores a program or instructions capable of running on the processor, and in a case that the program or instructions are executed by the processor, the steps of the communication method based on SL positioning assistance information according to any one of claims 1 to 37 are implemented.

74. A network-side device, comprising a processor and a memory, wherein the memory stores a program or instructions capable of running on the processor, and in a case that the program or instructions are executed by the processor, the steps of the communication method based on SL positioning assistance information according to any one of claims 39 to 71 are implemented.

75. A readable storage medium, wherein the readable storage medium stores a program or instructions, and in a case that the program or instructions are executed by a processor, the steps of the communication method based on SL positioning assistance information according to any one of claims 1 to 37 or the steps of the communication method based on SL positioning assistance information according to any one of claims 39 to 71 are implemented.
